# EUROPEAN PATENT APPLICATION

(11) **EP 4 622 262 A1**
(43) Date of publication of application: **24.09.2025**
(21) Application number: 25163977.9
(22) Date of filing: 14.03.2025
(51) Int. Cl.: H04N 19/42, G06T 3/4007, G06T 9/00, H04N 19/44, H04N 19/85

(54) **DECODING A TEXEL FROM A BLOCK OF ENCODED TEXTURE DATA**

(30) Priority: 21.03.2024 GB 202404066
(71) Applicant: Imagination Technologies Limited, Kings Langley, Hertfordshire WD4 8LZ (GB)
(72) Inventor: Spreij, Tijmen, Kings Langley, WD4 8LZ (GB)
(74) Representative: Slingsby Partners LLP

(57) **Abstract**

A decoder configured to decode a texel from a block of texture data encoded according to the Adaptive Scalable Texture Compression (ASTC) format, the decoder comprising a logic circuit for use in calculating colour endpoints in accordance with a plurality of different colour endpoint modes (CEMs), in which: the logic circuit comprises multiple inputs and multiple outputs; and the decoder is configured to: select a colour endpoint mode (CEM) of the plurality of different CEMs; generate, in dependence on the selected CEM, a plurality of input values for inputting to the multiple inputs of the logic circuit, wherein: the plurality of input values are generated such that, when operated on by the logic circuit, the logic circuit will generate at least one intermediate output value at its multiple outputs for use in calculating colour endpoints in accordance with the selected CEM; and for different CEMs of the plurality of CEMs, the decoder is configured to generate, in a different manner, a different plurality of input values for inputting to the same inputs of the multiple inputs of the logic circuit; input the plurality of input values to the multiple inputs of the logic circuit, the logic circuit being configured to operate on said plurality of input values so as to generate said at least one intermediate output value; determine a colour endpoint pair in accordance with the selected CEM in dependence on said at least one intermediate output value; and decode the texel in dependence on the colour endpoint pair.

## Description

### CROSS-REFERENCE TO RELATED APPLICATION

This application claims priority from UK patent application 2404066.9 filed on 21 March 2024, which is herein incorporated by reference in its entirety.

### TECHNICAL FIELD

The present disclosure is directed to a decoder configured to decode a texel from a block of texture data encoded according to the Adaptive Scalable Texture Compression (ASTC) format, and a method of decoding first and second texels from a block of texture data encoded according to the ASTC format.

### BACKGROUND

Textures are used heavily within the field of graphics processing. Textures may be used to represent surface properties, illumination (e.g. within the environment of a scene being imaged) or to apply surface detail to an object being rendered. Textures may require relatively large amounts of memory storage, and texture accesses can contribute a significant proportion of a graphics device's memory bandwidth. As such, it is often desirable to compress texture data.

One texture compression format is known as Adaptive Scalable Texture Compression (ASTC). The ASTC compression format is defined in the ASTC Specification - as described in Section 23 of the Khronos Data Format Specification Version 1.3.1 by Andrew Garrard, dated 3 April 2020, see also: https://registry.khronos.org/DataFormat/specs/1.3/dataformat.1.3.html#ASTC.

In ASTC, a compressed image, or texture, is subdivided into a plurality of blocks of texture data, where each data block represents the texture data for a block of texels forming the texture. Each block of texture data has a fixed memory footprint (i.e. has a fixed size) of 128 bits. However, the data blocks are capable of representing the texture data for a varying number of texels. The number of texels represented by a single data block may be referred to as the block footprint. The block footprint may be fixed for a given texture. The block footprint's height and width (in texels) are generally selectable from a number of predefined sizes. The footprint may be rectangular, and in some cases the block's footprint may be square. For 2-D textures, examples of block footprints include 4 x 4 texels; 6 x 6 texels; 8 x 8 texels and 12 x 12 texels (giving compression rates of 8 bits per pixel (bpp); 3.56 bpp; 2 bpp and 0.89 bpp respectively).

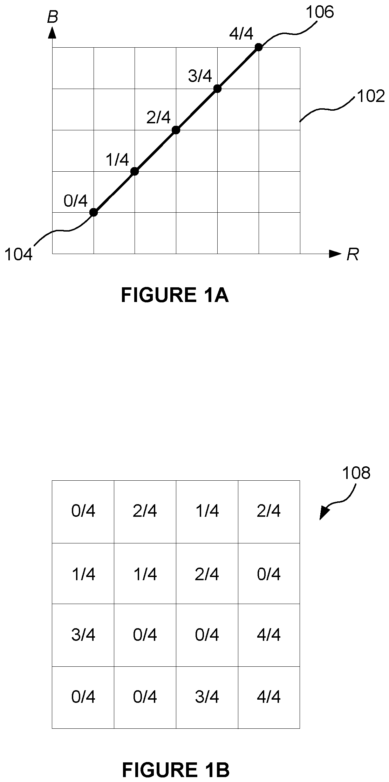

The colour of each texel in a block is defined as a point on a linear gradient between a pair of colours. This pair of colours is referred to as a pair of "colour endpoints". Colours for each texel can be calculated by interpolating between a pair of colour endpoints. An interpolant weight can be used to specify a weighted average of the two colour endpoints (i.e. the position on the linear gradient between those colour endpoints) to thereby define the colour for that texel. This process is illustrated schematically in Figure 1A, which shows a pair of colour endpoints A (denoted 104) and B (denoted 106) in a red-blue (RB) colour space denoted 102. In this example, each texel can have one of five weights: 0/4 (corresponding to colour A); 1/4; 2/4; 3/4; or 4/4 (corresponding to colour B). An example of the texel weights for each texel of a 4 by 4 block denoted 108 is shown in Figure 1B. Though shown for the simple example of an RB colour space, the same approach is applied when working in different colour spaces such as RGB or RGBA.

The interpolant weights may be stored in the form of a weight grid - e.g. a 2-D grid of weight values - that is encoded within the data block. In certain encodings, an interpolant weight may be stored for each texel in the data block. That is, the number of weights in the weight grid may correspond to the number of texels in the data block. Alternatively, a sparser weight grid may be stored that contains fewer weights than the number of texels represented by each data block. This alternative may be used, for example, when there is not enough data within the block to store an interpolant weight for each texel - e.g. for data blocks that represent texture data for a larger number of texels (e.g. 12 x 12 texels). In this alternative, an interpolant weight for each texel in the data block can be calculated by interpolating between weights of this sparser weight grid. In order to do this, for a texel, the position of that texel with respect to the weight grid is first determined. This can be achieved by scaling a coordinate position of that texel that is defined according to the dimensions of the block footprint to a coordinate position for that texel that is defined with respect to the dimensions of weight grid. The position of the texel with respect to the weight grid can then be used to select a subset of weights of the weight grid, and to interpolate between those weights to calculate an interpolant weight for the texel. For example, the four weights from a weight grid that are closest to (e.g. surround, or are the nearest neighbours to) that texel may be selected and interpolated between to calculate the interpolant weight for a texel.

The pair of colour endpoints for a texel are determined from a plurality of colour values encoded in the data block. Said colour values are decoded from the data block and those values are then converted into colour endpoints. The way in which colour values are converted into colour endpoints is defined by an algorithm known as the colour endpoint mode (CEM). Information on the CEM for a texel is encoded within the data block. The ASTC Specification defines sixteen possible colour endpoint modes (CEMs), which vary from computing a pair of colour endpoints from two colour values up to computing a pair of colour endpoints from eight colour values. The sixteen CEMs are typically enumerated using zero indexing - i.e. as CEM 0 to CEM 15. The ASTC Specification referred to herein defines the sixteen CEMs in Sections 23.14. and 23.15.

In certain cases, a single pair of colour endpoints can be used to calculate the colour for each texel within a data block. However, in other cases, a block may represent texels which have a mixture of different colours that cannot reasonably be represented by interpolating between a single pair of colour endpoints. To get around this problem, each texel in the data block can be assigned to one of up to four partitions, where each partition is associated with its own colour endpoint pair. To determine the colour of a texel within the block, the partition that the texel belongs to is determined and the colour calculated using the interpolant weight for that texel and the colour end point pair associated with the partition. The interpolant weight can be stored and encoded within the data block independently of the colour end point pair (i.e. independently of the partition to which the texel belongs).

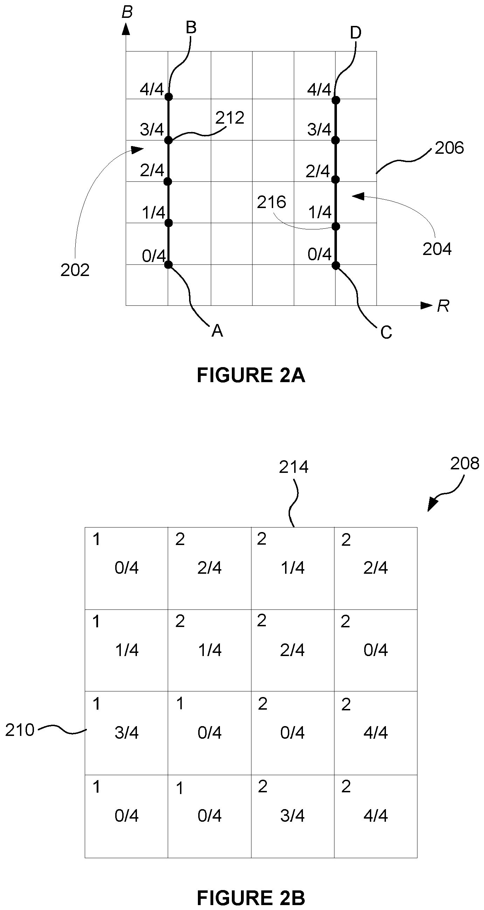

This is illustrated schematically in Figures 2A and 2B. Figure 2A shows a first colour endpoint pair 202 formed of endpoint colours A and B, and a second colour endpoint pair 204 formed of endpoint colours C and D within an RB colour space 206. The first endpoint pair belongs to a first partition and the second endpoint pair belongs to a second partition. Thus in this example there are two partitions. Each colour endpoint pair can be interpolated between with five weights. Figure 2B shows a block of texels 208 represented by a block of texture data. A partitioning mask is shown overlaid on the block of texels indicating which partition each texel belongs to. The partitioning mask is a grid of values, where each value indicates which partition a texel belongs to. Each value may as such be referred to as a partition index. In particular, a value of 1 indicates a texel belongs to the first partition (associated with colour endpoint pair 202); and a value of 2 indicates a texel belongs to the second partition (associated with colour endpoint pair 204). The interpolant weights for each texel are also shown. To determine the colour for a texel, the partition index is used to identify the colour endpoint pair, and the interpolant weight is used to interpolate between that pair. For example, texel 210 has a partition index of 1, and an interpolant weight of 3/4 and thus has a colour defined by the position 212 in RB colour space. Texel 214 has a partition index of 2 and an interpolant weight of 1/4 and so has a colour defined by the position 216 in RB colour space.

Texture data compressed in accordance with the ASTC format can be decoded (e.g. decompressed) by an ASTC decoder. Often, ASTC decoders are embodied in hardware on an integrated circuit. It is generally desirable to reduce the chip area requirement of devices such as ASTC decoders.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

According to a first aspect of the present invention there is provided a decoder configured to decode a texel from a block of texture data encoded according to the Adaptive Scalable Texture Compression (ASTC) format, the decoder comprising a logic circuit for use in calculating colour endpoints in accordance with a plurality of different colour endpoint modes (CEMs), in which: the logic circuit comprises multiple inputs and multiple outputs; and the decoder is configured to: select a colour endpoint mode (CEM) of the plurality of different CEMs; generate, in dependence on the selected CEM, a plurality of input values for inputting to the multiple inputs of the logic circuit, wherein: the plurality of input values are generated such that, when operated on by the logic circuit, the logic circuit will generate at least one intermediate output value at its multiple outputs for use in calculating colour endpoints in accordance with the selected CEM; and for different CEMs of the plurality of CEMs, the decoder is configured to generate, in a different manner, a different plurality of input values for inputting to the same inputs of the multiple inputs of the logic circuit; input the plurality of input values to the multiple inputs of the logic circuit, the logic circuit being configured to operate on said plurality of input values so as to generate said at least one intermediate output value; determine a colour endpoint pair in accordance with the selected CEM in dependence on said at least one intermediate output value; and decode the texel in dependence on the colour endpoint pair.

The logic circuit may comprise one or more operational units, the one or more operational units being configured to perform the same operation(s) on input values received at the multiple inputs of the logic circuit for different CEMs of the plurality of CEMs.

The logic circuit may comprise an operational unit operable to subtract an input value A from an input value B; and for at least one CEM of the plurality of different CEMs, the decoder may be configured to generate said input values A and B such that the input value B has a value double that of the input value A.

The logic circuit may comprise an operational unit operable to add an input value C to an input value D; and for at least one CEM of the plurality of different CEMs, the decoder may be configured to generate said input values C and D such that the input value D has a value of zero.

For at least one CEM of the plurality of different CEMs, the plurality of input values may comprise one or more inverted input values and one or more compensatory input values, and the decoder may be configured to: generate the one or more inverted input values by, for each inverted input value: inverting each of the bits of an intermediate input value so as to generate an inverted input value, wherein said inverting does not comprise adding one to the value of said inverted input value; and generate the one or more compensatory input values such that, when the logic circuit operates on the one or more inverted input values and the one or more compensatory input values, the one or more compensatory input values compensate for said inverting not comprising adding one to the value of each of said one or more inverted input values.

At least one of the plurality of input values may be a bit string generated using bits selected from colour values encoded in the data block.

For different CEMs of the plurality of CEMs, the decoder may be configured to generate, using different bits selected from the colour values encoded in the data block and/or by arranging bits of the colour values encoded in the data block in different positions, different bit strings for inputting to the same input(s) of the multiple inputs of the logic circuit.

The logic circuit may comprise a set of adders and/or subtractors. Said set of adders and/or subtractors may be arranged as a tree of adders and/or subtractors.

The same set of adders and/or subtractors may be used for different CEMs of the plurality of CEMs.

The logic circuit may comprise: a first subtractor configured to subtract a second input value from a first input value to output a first intermediate output value; a second subtractor configured to subtract a fourth input value from a third input value to output a second intermediate output value; a first adder configured to sum a fifth input value and a sixth input value to output a third intermediate output value; a second adder configured to sum a seventh input value and an eight input value to output a fourth intermediate output value; a third subtractor configured to subtract a tenth input value from a ninth input value to output a fifth intermediate output value; a fourth subtractor configured to subtract the third intermediate output value from the first intermediate output value to output a sixth intermediate output value; and a fifth subtractor configured to subtract the fourth intermediate output value from the second intermediate output value to output a seventh intermediate output value.

The selected CEM may be CEM 7, and: the first, third and ninth input values may be equal; and the sixth, eighth and tenth input values may be equal.

The selected CEM may be CEM 7, and: the decoder may be configured to generate a value of zero as the fifth input value, such that the third intermediate output value will be equal to the sixth input value; and/or the decoder may be configured to generate a value of zero as the seventh input value, such that the fourth intermediate output value will be equal to the eighth input value.

The selected CEM may be mode 5 of CEM 11, 14 or 15, and: the decoder may be configured to generate the first and second input values such that the first input value has a value double that of the second input value in order that the first intermediate output value will be equal to the second input value; and/or the decoder may be configured to generate the third and fourth input values such that the third input value has a value double that of the fourth input value in order that the second intermediate output value will be equal to the fourth input value.

The selected CEM may be CEM 7, 11, 14 or 15, and: the first, second, fifth, sixth and seventh intermediate output values may be used in determining the colour endpoint pair in accordance with the selected CEM.

The selected CEM may be CEM 8 or 12, and: the sixth and seventh intermediate output values may be used in determining the colour endpoint pair in accordance with the selected CEM.

The selected CEM may be CEM 8 or 12, and the decoder may be configured to generate values of -3 as the first and third input values, in order to compensate for generating the second, fourth, fifth, sixth, seventh and eight input values by inverting each of the bits of respective intermediate input values without adding one to the values of said inverted intermediate input values.

The selected CEM may be CEM 9 or 13, and: the seventh intermediate output value may be used in determining the colour endpoint pair in accordance with the selected CEM.

The selected CEM may be CEM 9 or 13, and the decoder may be configured to generate a value of -3 as the third input value, in order to compensate for generating the fourth, seventh and eight input values by inverting each of the bits of respective intermediate input values without adding one to the values of said inverted intermediate input values.

The logic circuit may be implemented in fixed function hardware.

The plurality of different CEMs may include: CEMs 7, 8, 9, 12 and 13; CEMs 7, 11, 14 and 15; CEMs 8, 9, 11, 12, 13, 14 and 15; or CEMs 7, 8, 9, 11, 12, 13, 14 and 15.

The plurality of different CEMs may include at least one high dynamic range (HDR) CEM.

The plurality of different CEMs may include at least eight different CEMs.

According to a second aspect of the present invention there is provided a method of decoding, using a decoder comprising a logic circuit for use in calculating colour endpoints in accordance with a plurality of different colour endpoint modes (CEMs), first and second texels from a block of texture data encoded according to the Adaptive Scalable Texture Compression (ASTC) format, the logic circuit comprising multiple inputs and multiple outputs, the method comprising: so as to decode the first texel: selecting a first colour endpoint mode (CEM) of the plurality of different CEMs; generating, in a first manner, in dependence on the first CEM, a first plurality of input values for inputting to the multiple inputs of the logic circuit, the first plurality of input values being generated such that, when operated on by the logic circuit, the logic circuit will generate at least one first intermediate output value at its multiple outputs for use in calculating colour endpoints in accordance with the first CEM; and inputting the first plurality of input values to inputs of the multiple inputs of the logic circuit, the logic circuit operating on said first plurality of input values so as to generate said at least one first intermediate output value; determining a first colour endpoint pair in accordance with the first CEM in dependence on said at least one first intermediate output value; and decoding the first texel in dependence on the first colour endpoint pair; and so as to decode the second texel: selecting a second CEM of the plurality of different CEMs; generating, in a second manner, in dependence on the second CEM, a second plurality of input values for inputting to the same inputs of the multiple inputs of the logic circuit, the second plurality of input values being generated such that, when operated on by the logic circuit, the logic circuit will generate at least one second intermediate output value at its multiple outputs for use in calculating colour endpoints in accordance with the second CEM; and inputting the second plurality of input values to the multiple inputs of the logic circuit, the logic circuit operating on said second plurality of input values so as to generate said at least one second intermediate output value; determining a second colour endpoint pair in accordance with the second CEM in dependence on said at least one second intermediate output value; and decoding the second texel in dependence on the second colour endpoint pair.

The decoder may be embodied in hardware on an integrated circuit. There may be provided a method of manufacturing, at an integrated circuit manufacturing system, a decoder as described herein. There may be provided an integrated circuit definition dataset that, when processed in an integrated circuit manufacturing system, configures the system to manufacture a decoder as described herein. There may be provided a non-transitory computer readable storage medium having stored thereon a computer readable description of a decoder as described herein that, when processed in an integrated circuit manufacturing system, causes the integrated circuit manufacturing system to manufacture an integrated circuit embodying a decoder as described herein.

There may be provided an integrated circuit manufacturing system comprising: a non-transitory computer readable storage medium having stored thereon a computer readable description of the decoder as described herein; a layout processing system configured to process the computer readable description so as to generate a circuit layout description of an integrated circuit embodying the decoder as described herein; and an integrated circuit generation system configured to manufacture the decoder as described herein according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1A shows a colour endpoint pair located within an RB colour space.
Figure 1B shows a 4 by 4 block of texels and a grid of weights indicating the weight for each texel used to interpolate between a colour endpoint pair.
Figure 2A shows two colour endpoint pairs located within an RB colour space.
Figure 2B shows a 4 by 4 block of texels with a partition mask indicating the partition index of each texel and a weight grid indicating the weight for each texel.
Figure 3 shows a decoder for decoding a texel from a block of texture data compressed according to the ASTC format.
Figure 4 shows a logic circuit for use in calculating colour endpoints in accordance with a plurality of different colour endpoint modes (CEMs).
Figure 5A illustrates a technique for passing an input *x* through a subtractor.
Figure 5B illustrates a technique for passing an input *x* through an adder.
Figure 5C illustrates the use of compensatory input values within a logic circuit.
Figure 6 shows a method of decoding first and second texels from a block of texture data encoded according to the ASTC format.
Figure 7 shows a computer system in which a decoder is implemented; and
Figure 8 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

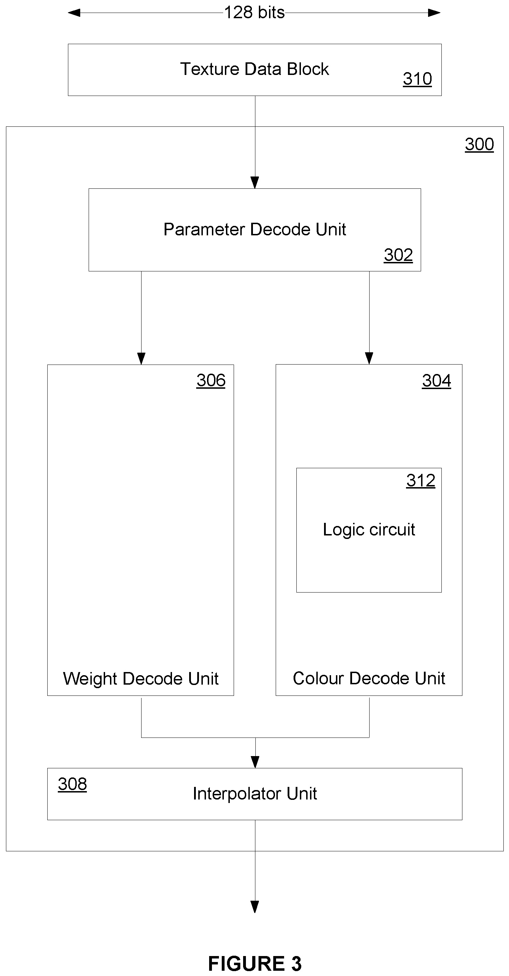

Texture data compressed in accordance with the Adaptive Scalable Texture Compression (ASTC) format can be decoded (e.g. decompressed) by an ASTC decoder. Figure 3 shows a decoder 300 for decoding a texel from a block of texture data compressed according to the ASTC format. The decoder 300 can be implemented in fixed function hardware, software running on general purpose hardware, or any combination thereof.

The decoder 300 is configured to receive as an input a block of ASTC-encoded texture data, shown at 310. The block of texture data 310 can store configuration data, colour data and weight data.

The configuration data can indicate parameters of the texture data and its encoding within the block of texture data, and is generally used to facilitate the decoding of the colour and weight data.

The colour data relates to colour values that are to be converted into colour endpoints. The colour data may relate to two, four, six or eight colour values per pair of colour endpoints (e.g. per partition) - the number of colour values per pair of colour endpoints depending on the complexity of the texel colours being encoded. The colour data may relate to more than one pair of colour endpoints. The colour data may encode up to a maximum number of colour values. For example, that maximum number might be 18. The colour values associated with each partition (e.g. each pair of colour endpoints) are typically enumerated using zero indexing. Hence: the first colour value associated with a partition may be labelled V₀ (or, v0); the second colour value associated with that partition may be labelled V₁ (or, v1); the third colour value associated with that partition may be labelled V₂ (or, v2); the fourth colour value associated with that partition may be labelled V₃ (or, v3); the fifth colour value associated with that partition may be labelled V₄ (or, v4); the sixth colour value associated with that partition may be labelled V₅ (or, v5); the seventh colour value associated with that partition may be labelled V₆ (or, v6); and the eighth colour value associated with that partition may be labelled V₇ (or, v7). The colour data representing the colour values may be stored in the block of texture data 310 in a one-dimensional bit vector. That is, the one-dimensional bit vector may encode the bits of the first colour value associated with a partition, followed by the bits of the second colour value associated with that partition, etc.

The weight data relates to the weights used to interpolate between colour endpoints. The weight data may represent a grid (e.g. a 2D grid) of weights. The weight data representing the weight grid may be stored in the block of texture data 310 in a one-dimensional bit vector. The weights of the weight grid may be encoded in a row-by-row pattern. That is, the one-dimensional bit vector may encode the weights of the first row of the weight grid, followed by the second row of the weight grid, etc. It is also possible for the block of texture data 310 to utilise a so-called "dual-plane mode". The dual-plane mode is defined in the ASTC Specification. In brief, for "single-plane" texture data, the weight grid encoded in the data block comprises a first plurality of weights in a first plane. For dual-plane texture data, the weight grid encoded in the data block comprises a first plurality of weights in a first plane and a second plurality of weights in a second plane - where the dimensions of the first and second plane are the same. In dual-plane mode, the two different planes of weights can be assigned to (e.g. are for use to interpolate between colour components in) different colour channels (e.g. R, G and B, and A colour channels, respectively, in RGBA colour space). Whether or not dual-plane mode is used can be indicated within the configuration data.

The colour data and/or weight data may be encoded according to an integer sequence encoding (ISE) scheme - as defined in the ASTC Specification. The integer sequence encoding (ISE) scheme is sometimes referred to as a bounded integer sequence encoding (BISE) scheme. The use of the ISE scheme enables the colour and/or weight values to be encoded in a fractional number of bits. A sequence of values can be represented using trits (base-3 representation) or quints (base-5 representation). Other base representations may also be used.

The block of texture data 310 may be encoded using either high dynamic range (HDR) or low dynamic range (LDR) (corresponding to the HDR profile and LDR profile respectively). Generally, the LDR profile supports two-dimensional textures, but it is also optionally possible to support three-dimensional textures using the LDR profile. The HDR profile also supports two-dimensional textures and additionally supports three-dimensional textures composed of multiple two-dimensional slices of compressed data.

The block of texture data 310 represents (e.g. encodes) texel colours for an *n* by m block of texels. It is to be understood that the texel colours may be formed from colour channels (e.g. luminance, R, G, B, alpha etc.), but in general may represent many different types of graphics data, e.g. height maps, normal maps, lighting etc.

The *n* by *m* block of texels represented by the block of texture data 310 may form part of a compressed image, or texture. The block of texture data 310 has a fixed size (e.g. memory footprint) of 128 bits. A texture may be composed of a plurality of such blocks of texture data, with each of those data blocks being encoded in a respective 128-bit data block.

The size of the *n* by *m* block of texels (as governed by the values of *n* and *m*) may be referred to as the block's footprint. In other words, the block of texture data 310 may have a block footprint of *n* by m. The block footprint is selectable from a number of predefined sizes specified by the ASTC Specification. For 2-D textures, examples of block footprints include 4 x 4 texels; 6 x 6 texels; 8 x 8 texels and 12 x 12 texels.

Decoder 300 can decode (e.g. decompress) one or more texels from the block of texture data 310. That is, decoder 300 may decode a plurality of texels of the *n* by m block of texels in series - e.g. "one texel at a time". Alternatively, the decoder may decode a plurality of texels of the *n* by m block of texels in parallel. For example, decoder 300 may decode a plurality of texels of a *p* by *q* sub-block of texels from the *n* by *m* block of texels represented by the block of texture data, where *p* ≤ *n* and *q* ≤ *m.* The number of texels *nₜ* comprised by the *p* by *q* sub-block of texels may be in the range 2 ≤ *nₜ* ≤ *nm.* The plurality of texels that are decoded from the *p* by *q* sub-block of texels may comprise *pq* texels. In a preferred example, *p=2 and q =* 2. The decoder may, for instance, comprise a plurality of outputs (not shown in the Figures) for outputting respective decoded texels. The decoder may operate to decode texels according to a decoding process. That decoding process may comprise a series of decoding steps, or operations. The series of steps undergone to decode a particular texel may be referred to as a decoding pipeline. Thus, the decoder 300 may operate to decode texels from the block of texture data 310, where each texel is decoded according to decoding pipeline. The decoder 300 may be able to use certain portions of the data decoded from the block of texture data 310 as part of the decoding process for each of the plurality of texels of a *p* by *q* sub-block of texels being decoded from that block. Thus, a plurality of texels of the *p* by *q* sub-block of texels may be able to be decoded from the block of texture data 310 in parallel without requiring parallel processing for all stages of the decoding process.

The decoder 300 comprises a parameter decode unit 302, a colour decode unit 304, a weight decode unit 306 and an interpolator unit 308. The parameter decode unit 302 is coupled to the colour decode unit 304 and the weight decode unit 306. More specifically, an output of the parameter decode unit 302 is coupled to an input of both the weight decode unit 306 and colour decode unit 304. Each of the colour decode unit 304 and the weight decode unit 306 are coupled to the interpolator unit 308. More specifically, an output of each of the weight decode unit 306 and colour decode unit 304 is coupled to an input of the interpolator unit 308.

The basic functions of each of the parameter decode unit 302, the weight decode unit 306, the colour decode unit 304 and the interpolator unit 308 of decoder 300 are summarised in the following eight paragraphs.

The parameter decode unit 302 receives the block of texture data 310. The parameter decode unit operates to decode configuration data for the block of texture data 310. The configuration data may be data that specifies parameters of the texture data and its encoding within the block of texture data 310. The configuration data could include, for example: the weight grid dimensions and/or the range of the weight values; an indication of whether the texture data is single-plane or dual-plane; the partition count (e.g. the number of partitions for the block of texture data 310) and the colour endpoint mode(s) to be used when decoding each of the texels of the data block. The ASTC Specification defines said various types of configuration data.

The weight decode unit 306 decodes interpolation weight data for each of the texels being decoded from the block 310. The interpolation weight data for a given texel could be a single interpolant weight (e.g. if the texture data in the block uses single-plane mode) or a pair of interpolant weights (e.g. if the texture data in the block uses dual-plane mode). In certain encodings, the number of weights in each plane of the weight grid may correspond to the number of texels in the data block. In these encodings, the weight decode unit 306 may extract (e.g. decode, and read out for subsequent use) interpolant weight(s) for each texel being decoded directly from the weight grid. Alternatively, a sparser weight grid may be stored that comprises fewer weights in each plane than the number of texels represented by each data block. In this alternative, the weight decode unit 306 may determine interpolant weight(s) for each texel being decoded by interpolating between selected weights of this sparser weight grid. In this way, the weight decode unit may decode an interpolant weight for each texel being decoded from the block 310 (in single-plane mode), or a pair of interpolant weights for each texel being decoded from the block 310 (in dual-plane mode).

The colour decode unit 304 decodes colour endpoint data for the texels being decoded from the block of texture data 310. The colour endpoint data includes a pair of colour endpoints for each of one or more partitions. Each texel in the block of texture data 310 can be assigned to one of up to four partitions, where each partition is associated with its own colour endpoint pair. If the block of data has a partition count of one, then each of the texels being decoded is associated with the same colour endpoint pair. That said, the colour endpoint data may include up to eight colour endpoints forming four colour endpoint pairs (for a partition count of four - i.e. one colour endpoint pair per partition).

When decoding a texel, colour values are decoded from the colour data encoded in data block by the colour decode unit 304, and those colour values are then converted into colour endpoints by the colour decode unit 304.

The colour decode unit 304 decodes the colour values from the data block that are required by the colour endpoint mode(s) that will be used to determine the colour endpoint pair(s) for the texel(s) being decoded. As described herein, the colour data may relate to two, four, six or eight colour values (e.g. labelled V₀ to V₇, or v0 to v7, using zero indexing) per pair of colour endpoints. Once decoded from the block of texture data 310, each colour value may comprise eight bits. Said bits may be arranged as a sequence of bits. That is, each colour value may be a bit string. The positions of the bits within said bit string can be enumerated using zero indexing. Hence: the first (least significant) bit of the N^{th} colour value may be labelled V_{N}⁰ (or, vN[0]); the second bit of the N^{th} colour value may be labelled V_{N}¹ (or, vN[1]); the third bit of the N^{th} colour value may be labelled V_{N}² (or, vN[2]); the fourth bit of the N^{th} colour value may be labelled V_{N}³ (or, vN[3]); the fifth bit of the N^{th} colour value may be labelled V_{N}⁴ (or, vN[4]); the sixth bit of the N^{th} colour value may be labelled V_{N}⁵ (or, vN[5]); the seventh bit of the N^{th} colour value may be labelled V_{N}⁶ (or, vN[6]); and the eighth (most significant) bit of the N^{th} colour value may be labelled V_{N}⁷ (or, vN[7]).

The way that colour values decoded from the block of texture data 310 are converted into colour endpoints by the colour decode unit 304 is defined by an algorithm known as the colour endpoint mode (CEM). Information on the CEM to be used when decoding a texel is part of the configuration data decoded by the parameter decode unit 302. The ASTC Specification defines sixteen possible colour endpoint modes (CEMs). The sixteen CEMs are typically enumerated using zero indexing - i.e. as CEM 0 to CEM 15. Different CEMs use different methods to convert the decoded colour values to a pair of colour endpoints. Many of these methods comprise generating bit string values using bits selected from the decoded colour values and performing one or more operations (e.g. additions, subtractions, etc.) using those bit string values. Some CEMs have multiple "modes" - e.g. that define different ways of generating bit string values to be operated on in accordance with that CEM. In some examples: CEM 7 has six modes, enumerated modes 0 to 5, using zero indexing; and CEMs 11, 14 and 15 have eight modes, enumerated 0 to 7, using zero indexing. The ASTC Specification referred to herein defines how each of the sixteen CEMs convert the decoded colour values into colour endpoints in Sections 23.14. and 23.15. Fixed function logic circuitry is typically provided to execute the operations defined by the CEMs within an ASTC decoder.

The sixteen CEMs can be divided into four classes - enumerated 0 to 3, using zero indexing. In particular, CEMs 0 to 3 are part of class 0, CEMs 4 to 7 are part of class 1, CEMs 8 to 11 are part of class 2, and CEMs 12 to 15 are part of class 3. Generally, the higher the class number the more "complex" the colour endpoints output by the CEMs are. For example, CEMs in class 0 may output a pair of colour endpoints representative of luminance (e.g. two shades of grey), whilst CEMs in class 3 may output a pair of colour endpoints representative of two distinct colours with variable transparency (e.g. two colours in RGBA colour space). The number of decoded colour values operated on in accordance with a CEM can be represented by (*class number +* 1) × 2. That is: class 0 CEMs are used to convert two colour values to a colour endpoint pair; class 1 CEMs are used to convert four colour values to a colour endpoint pair; class 2 CEMs are used to convert six colour values to a colour endpoint pair; and class 3 CEMs are used to convert eight colour values to a colour endpoint pair. Different CEMs are used for high dynamic range (HDR) and low dynamic range (LDR) encodings. For example, CEMs 2, 3, 7, 11, 14 and 15 can be used for high dynamic range (HDR) encodings - and may therefore be referred to as HDR CEMs.

The interpolation unit 308 calculates an output colour value for each texel being decoded. The interpolator unit 308 may calculate the colour for each texel being decoded by using the interpolant weight(s) for that texel (as output by the weight decode unit 306) to interpolate between the colour endpoint pair to which that texel is assigned (as output by the colour decode unit 304). More specifically, to determine the colour for a texel, a partition index associated with the texel can be used to identify the colour endpoint pair of the partition to which that texel is assigned. The interpolant weight(s) for that texel can then be used to interpolate between that pair of colour end points. Some examples of using a single interpolant weight for a texel to interpolate between a colour endpoint pair are described herein with reference to Figures 1A, 1B, 2A and 2B. In dual-plane mode, a first interpolant weight for a texel can be used to interpolate between endpoints in a first colour channel (e.g. the A channel in RGBA colour space) of a colour endpoint pair, whilst a second interpolant weight for that texel can be used to interpolate between endpoints in the other colour channels (e.g. the RGB channels in RGBA colour space) of that colour endpoint pair. This is explained in further detail in the ASTC Specification.

The decoder 300 may then output the decoded colour values for each of texels being decoded. Texel colour values for a plurality of texels being decoded may be output in series, or in parallel.

The present disclosure relates to improvements in the logic circuitry used to execute the operations defined by the CEMs within an ASTC decoder. That is, the present disclosure relates primarily to improvements within the colour decode unit 304 of a decoder 300.

As described herein, often, ASTC decoders are embodied in hardware on an integrated circuit. In a simple implementation, entirely separate logic circuits can be provided within the decoder for each CEM. That is, a respective, different, logic circuit may be provided to execute the operations defined by each of a plurality of different CEMs (e.g. each of the sixteen CEMs). Such an implementation requires the provision of a large amount of fixed function logic circuitry - which necessarily consumes a large chip area when implemented in hardware. Further, in such an implementation, when one CEM is selected for the calculation of a pair of colour endpoints, the logic circuits for all other CEMs would be unused - which is inefficient.

Some previous attempts have been made to provide logic that can be shared between CEMs. However, these attempts are typically limited to the provision of individual logic units (e.g. an adder, or a subtractor) that can be shared between CEMs that define (e.g. as part of a larger series of operations) an individual operation (e.g. an addition or a subtraction) that operates on inputs generated from the decoded colour values in the same manner (e.g. by arranging the same set of bits selected from the decoded colour values in the same order). Sharing individual logic units in this way can reduce the chip area of an ASTC decoder when implemented in hardware, although often only to a limited extent. This is because there are a limited number of individual operations defined by different CEMs that are performed on inputs generated in the same manner.

Described herein is a decoder comprising a logic circuit for use in calculating colour endpoints in accordance with a plurality of different colour endpoint modes (CEMs). The plurality of different CEMs may include at least four different CEMs, preferably at least five different CEMs, more preferably at least seven different CEMs, and most preferably at least eight different CEMs. For example, the plurality of different CEMs may comprise: CEMs 7, 11, 14 and 15; CEMs 7, 8, 9, 12 and 13; CEMs 8, 9, 11, 12, 13, 14 and 15; or CEMs 7, 8, 9, 11, 12, 13, 14 and 15. The plurality of different CEMs may include at least one high dynamic range (HDR) CEM. That is, the plurality of different CEMs may include at least one of HDR CEMs 2, 3, 7, 11, 14 and 15.

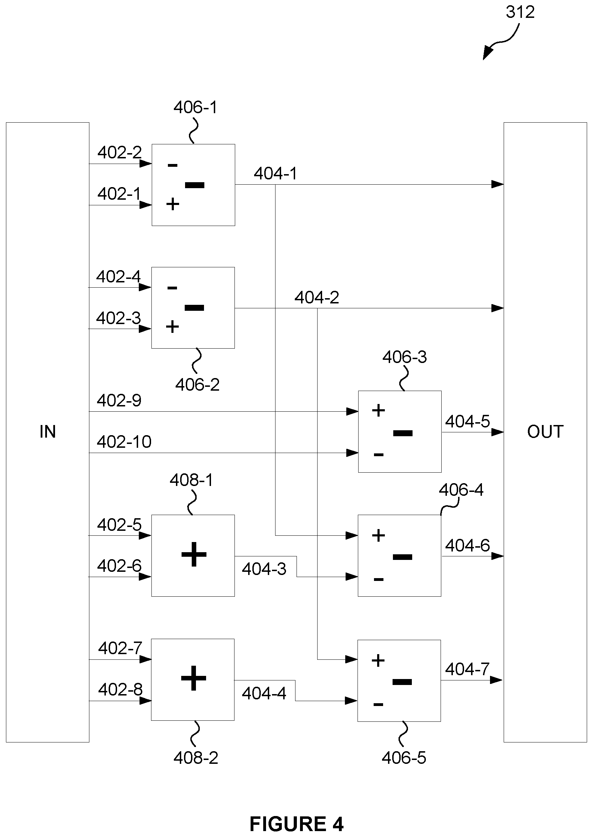

Figure 4 shows an example logic circuit 312 for use in calculating colour endpoints in accordance with said plurality of different CEMs. Logic circuit 312 shown in Figure 4 may be comprised by the decoder 300 described herein with reference to Figure 3. In particular, logic circuit 312 may be comprised by the colour decode unit 304 of the ASTC decoder 300 described herein with reference to Figure 3.

The logic circuit comprises multiple inputs, one or more operational units (e.g. adders, subtractors etc.), and multiple outputs. The multiple inputs are configured to receive input values generated by the decoder 300. The one or more operational units are configured to operate on those input values. The logic circuit is configured to generate output values at its multiple outputs. The logic circuit may be implemented in fixed function hardware. The logic circuit may be a binary logic circuit.

The logic circuit may comprise a set of adders (e.g. 408-1 and 408-2 in Figure 4) and/or subtractors (e.g. 406-1, 406-2, 406-3, 406-4 and 406-5 in Figure 4). Said set of adders and/or subtractors may be arranged as a tree of adders and/or subtractors - e.g. as shown in Figure 4. The same set of adders and/or subtractors may be used for different CEMs of the plurality of CEMs. That is, the same set of adders and/or subtractors may be used by the decoder to execute different operations defined by different CEMs of the plurality of CEMs on input values generated in a different manner.

In the specific example shown in Figure 4, the logic circuit 312 comprises: a first subtractor 406-1 configured to subtract a second input value 402-2 from a first input value 402-1 to output a first intermediate output value 404-1; a second subtractor 406-2 configured to subtract a fourth input value 402-4 from a third input value 402-3 to output a second intermediate output value 404-2; a first adder 408-1 configured to sum a fifth input value 402-5 and a sixth input value 402-6 to output a third intermediate output value 404-3; a second adder 408-2 configured to sum a seventh input value 402-7 and an eight input value 402-8 to output a fourth intermediate output value 404-4; a third subtractor 406-3 configured to subtract a tenth input value 402-10 from a ninth input value 402-9 to output a fifth intermediate output value 404-5; a fourth subtractor 406-4 configured to subtract the third intermediate output value 404-3 from the first intermediate output value 404-1 to output a sixth intermediate output value 404-6; and a fifth subtractor 406-5 configured to subtract the fourth intermediate output value 404-4 from the second intermediate output value 404-2 to output a seventh intermediate output value 404-7. The first to tenth input values 402-1 to 402-10 may be generated by the decoder (e.g. decoder 300) comprising the logic circuit 312. The first to tenth input values 402-1 to 402-10 may be signed bit strings. Some of the input values may be equal to one another. For example, when the logic circuit is used for CEM 7: the first, third and ninth input values may be equal; and the sixth, eighth and tenth input values may be equal. The first to tenth input values 402-1 to 402-10 may be received at the multiple inputs of the logic circuit 312. In Figure 4, the multiple inputs of logic circuit 312 include the inputs to subtractors 406-1, 406-2 and 406-3, and the inputs to adders 408-1 and 408-2. The first, second, fifth, sixth and seventh intermediate output values 404-1, 404-2, 404-5, 404-6 and 404-7 may be output at the multiple outputs of the logic circuit 312. In Figure 4, the multiple outputs of logic circuit 312 include the outputs of subtractors 406-1, 406-2, 406-3, 406-4 and 406-5. At least one of said intermediate output values may be used by the decoder to calculate colour endpoints in accordance with a selected CEM of the plurality of different CEMs.

It is to be understood that the specific arrangement of adders and subtractors shown in Figure 4 is provided by way of example only, and that the principles described herein are not limited to logic circuits having that specific arrangement. In a very simple illustrative example, the skilled person would understand that one or both of subtractors 406-1 to 406-2 could be replaced by an adder if the decoder were instead configured to generate a "negative" (e.g. two's complement) version of the second/fourth input value for inputting to that adder (e.g. such that that adder "adds" a "negative" value to the first/third input value). In light of the present disclosure, the skilled person would be capable of making various modifications to the specific arrangement of adders and subtractors shown in Figure 4 without departing from the principles described herein.

The decoder (e.g. decoder 300) comprising the logic circuit (e.g. logic circuit 312) is configured to generate input values for inputting to the multiple inputs of the logic circuit in a manner that enables that same logic circuit to be used to execute different operations defined by different CEMs - as described in further detail in the following.

When decoding a texel from a block of texture data (e.g. the data block 310 described with reference to Figure 3), the decoder (e.g. decoder 300) is configured to select a colour endpoint mode (CEM) of the plurality of different colour endpoint modes (CEMs). As described herein, the plurality of different CEMs may comprise four or more of CEMs 7, 8, 9, 11, 12, 13, 14 and 15. As described herein, configuration data encoded within the data block may indicate which CEM is to be used when decoding that texel from the block of texture data.

The decoder 300 is configured to generate, in dependence on the selected CEM, a plurality of input values for inputting to the multiple inputs of the logic circuit (e.g. logic circuit 312). For example, the first to tenth input values 402-1 to 402-10 shown in Figure 4 may be generated by the decoder 300 - although it is to be understood that not all of the plurality of different CEMs require the generation of ten input values for inputting to the logic circuit 312. The plurality of input values are generated such that, when operated on by the logic circuit, the logic circuit will generate at least one intermediate output value at its multiple outputs (e.g. at least one output of its multiple outputs) for use in calculating colour endpoints in accordance with the selected CEM. For different CEMs of the plurality of CEMs, the decoder is configured to generate, in a different manner, a different plurality of input values for inputting to the same inputs of the multiple inputs of the logic circuit. That is, for example, the same input of the logic circuit (e.g. the "positive" input of the first subtractor 406-1) may receive a different input value generated in a different manner when the logic circuit is being used for a first CEM of the plurality of CEMs compared to when the logic circuit is being used for a second CEM of the plurality of CEMs. This enables the logic circuit (e.g. logic circuit 312) to be used to execute different operations defined by the plurality of different CEMs - e.g. even when the logic circuit comprises a set of operational units that do not initially appear to reflect the operations defined by one or more of said plurality of different CEMs.

For example, at least one of the plurality of input values may be a bit string (e.g. a sequence of bits) generated using bits selected from colour values encoded in the data block. The "manner" in which such an input value is generated may refer to which bits are selected from which of the decoded colour values and how those selected bits are positioned in the bit string input value - and may be specified in the ASTC Specification. For different CEMs of the plurality of CEMs, the decoder may be configured to generate, using different bits of the colour values encoded in the data block and/or by arranging bits of the colour values encoded in the data block in different positions, different bit strings for inputting to the same input(s) of the multiple inputs of the logic circuit. Said different bit strings can be said to have been generated in a different manner.

In other examples of the "manner" in which input values can be generated, the logic circuit may comprise an operational unit (e.g. an adder or a subtractor) that is not required to perform the operation(s) defined by a certain CEM of the plurality of CEMs. The decoder may be configured to generate a pair of input values for inputting to that operational unit in a manner that enables one of those input values to effectively "pass through" that operational unit of the logic circuit. That is, the decoder can be configured to generate the input values in a manner that maximises utilisation the logic circuit (e.g. logic circuit 312) for a greater number of different CEMs. This is more hardware efficient (e.g. requires a smaller chip area) than providing a separate a logic circuit that does not comprise that operational unit for use for a certain CEM, or providing additional multiplexing hardware within the logic circuit (e.g. logic circuit 312) to bypass that operational unit when the logic circuit is used for that certain CEM.

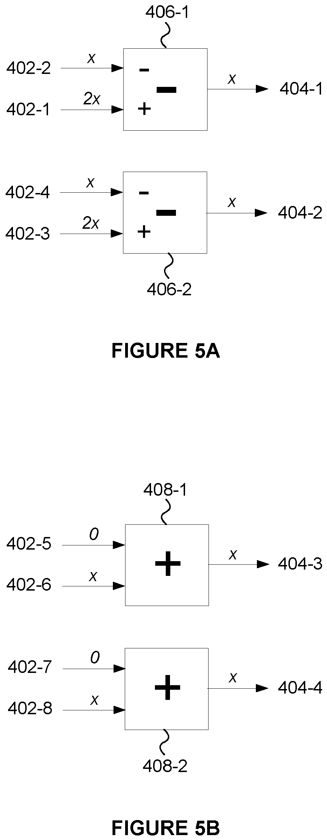

In a first example, the logic circuit may comprise an operational unit (e.g. a subtractor) operable to subtract an input value A from an input value B. For at least one CEM of the plurality of different CEMs, the decoder may be configured to generate said input values A and B such that the input value B has a value double that of the input value A. This enables the input value A to effectively "pass through" that operational unit of the logic circuit. This is illustrated in Figure 5A, which shows a technique for passing an input *x* through a subtractor. As shown in Figure 5A, this technique can be applied to the generation of input values for one or both of the first subtractor 406-1 and the second subtractor 406-2 of the logic circuit 312. Considering the first subtractor 406-1, the decoder can be configured to generate the first and second input values 402-1 and 402-2 such that the first input value 402-1 has a value (2x) double the value (x) of the second input value 402-2. The decoder may be configured to generate, as the second input value 402-2, a bit string using bits selected from colour values encoded in the data block, and generate the first input value 402-1 by "left-shifting" the second input value 402-2 by one bit. When the first subtractor 406-1 subtracts the second input value (x) from the first input value (2x), the value (x) of the first intermediate output value 404-1 will equal the value (x) of the second input value (i.e. as 2x *- x = x*)*.* Hence, the second input value (x) has effectively been "passed through" the first subtractor 406-1. The same technique can be applied to the generation of the third and fourth input values 402-3 and 402-4 for the second subtractor 406-2, as shown in Figure 5A. As will be shown in the detailed examples below, this technique can be used to pass input values through the first and second subtractors 406-1 and 406-2 when the selected CEM is mode 5 of any of CEMs 11, 14 or 15.

In a second example, the logic circuit may comprise an operational unit (e.g. an adder) operable to add an input value C to an input value D. For at least one CEM of the plurality of different CEMs, the decoder may be configured to generate said input values C and D such that the input value D has a value of zero. This enables the input value C to effectively "pass through" that operational unit of the logic circuit. This is illustrated in Figure 5B, which shows a technique for passing an input *x* through an adder. As shown in Figure 5B, this technique can be applied to the generation of input values for one or both of the first adder 408-1 and the second adder 408-2 of the logic circuit 312. Considering the first adder 408-1, the decoder can be configured to generate the fifth and sixth input values 402-5 and 402-6 such that the fifth input value 402-5 has a value of 0 and the sixth input value 402-6 has a value of *x* (or vice versa, in this example). The decoder may be configured to generate, as the sixth input value 402-6, a bit string using bits selected from colour values encoded in the data block. When the first adder 408-1 adds the fifth input value (0) to the sixth input value (*x*), the value (*x*) of the third intermediate output value 404-3 will equal the value (*x*) of the sixth input value (i.e. as 0 + *x* = *x*). Hence, the sixth input value (*x*) has effectively been "passed through" the first adder 408-1. The same technique can be applied to the generation of the seventh and eighth input values 402-7 and 402-8 for the second adder 408-2, as shown in Figure 5B. As will be shown in the detailed examples below, this technique can be used to pass input values through the first and second adders 408-1 and 408-2 when the selected CEM is CEM 7.

In yet another example of the "manner" in which input values can be generated, for at least one CEM of the plurality of different CEMs, the decoder may be configured to generate a plurality of input values comprising one or more inverted input values and one or more compensatory input values. The decoder may be configured to generate the one or more inverted input values by, for each inverted input value: inverting each of the bits of an intermediate input value so as to generate an inverted input value, wherein said inverting does not comprise adding one to the value of said inverted input value. The decoder may be configured to generate the one or more compensatory input values such that, when the logic circuit operates on the one or more inverted input values and the one or more compensatory input values, the one or more compensatory input values compensate for (e.g. "cancel out") said inverting not comprising adding one to the value of each of said one or more inverted input values. For example, the magnitude of the sum of the one or more compensatory input values may be *n*, where *n* is the number of inverted input values comprised by the plurality of input values. This can enable one of more of the operational units (e.g. adders or subtractors) of the logic unit that are not required to perform the operation(s) defined by a certain CEM to instead be used to operate on the one or more compensatory input values. This is more hardware efficient (e.g. requires a smaller chip area) than providing a separate logic circuit that does not comprise said one or more operational units for use for a certain CEM, or providing additional multiplexing hardware within the logic circuit (e.g. logic circuit 312) to bypass said one or more operational units when the logic circuit is used for that certain CEM. As will be shown in the detailed examples below, this technique can be used when the selected CEM is any of CEMs 8, 9, 12 and 13.

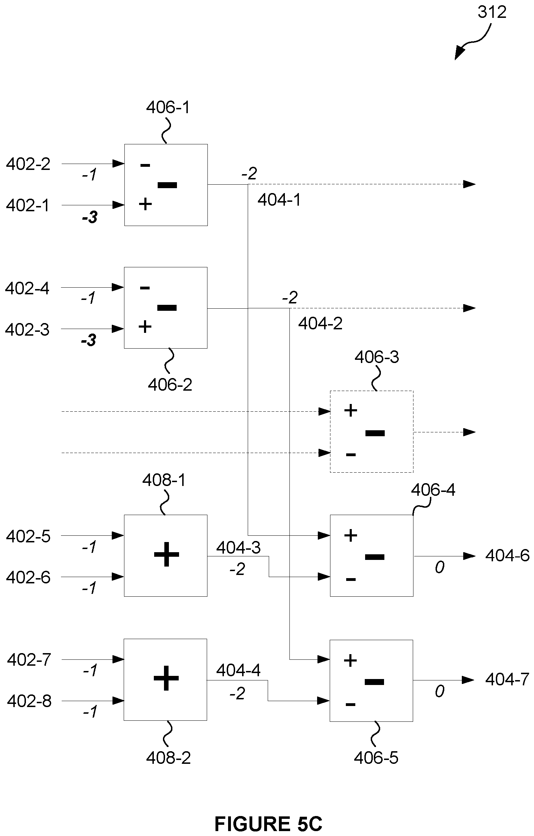

For example, for a certain CEM, the addition of two "positive" bit string values specified in the ASTC Specification could instead be performed using a subtractor and a two's-complement (e.g. "negative") version of one of those bit string values (e.g. by subtracting that "negative" value from the "positive" value). Typically, a two's-complement version of a binary value is generated by inverting each of its bits (i.e. changing each 0 to a 1, and each 1 to a 0), and adding one to the value of the inverted bit string. For example, +6 in decimal is 0110 in signed binary. Inverting each of the bits of 0110 gives 1001 in signed binary, which is -7 in decimal. Adding one to 1001 gives 1010 in signed binary, which is -6 in decimal - the two's compliment (e.g. "negative") version of 0110 (+6 in decimal). Rather than generating the two's-complement (e.g. "negative") version of a bit string composed of one or more of the colour values encoded in the data block, the decoder may instead bit-invert each of the bits of that bit string without adding one to the value of the inverted bit string (e.g. so to generate the value 1001/-7, in the example above). This means that there will be a discrepancy of -1 between the value of the two's-complement (e.g. "negative") version (e.g. -6, in the example above) and the bit-inverted (only) version of that set of bits (e.g. -7, in the example above). The decoder can then generate a compensatory input value to compensate for said discrepancy. This is illustrated in Figure 5C, which shows the use of compensatory input values within logic circuit 312. In Figure 5C, the second, fourth, fifth, sixth, seventh and eighth input values 402-2, 402-4, 402-5, 402-6, 402-7 and 402-8 are inverted input values generated in the manner described herein. As such, as shown in Figure 5C, each of these input values is associated with a discrepancy of -1. In Figure 5C, the first and third input values 402-1 and 402-3 are compensatory input values, each having a value of -3. In this example, the plurality of input values does not comprise ninth or tenth input values 402-9 or 402-10. The magnitude of the sum of the one or more compensatory input values ((-3)+(-3)=(-6)) is 6, where 6 is the number of inverted input values (402-2, 402-4, 402-5, 402-6, 402-7 and 402-8) comprised by the plurality of input values. Figure 5C illustrates how the discrepancies are compensated for (e.g. cancelled out) by the compensatory input values when the plurality of input values are operated on by the first, second, fourth and fifth subtractors 406-1, 406-2, 406-4 and 406-5, and the first and second adders 408-1 and 408-2, of the logic circuit 312. As shown in Figure 5C, the first and second intermediate output values 404-1 and 404-2 will be associated with a discrepancy of -2 (e.g. as, in both cases, (-3)-(-1)=-2). The third and fourth intermediate output values 404-3 and 404-4 will also be associated with a discrepancy of -2 (e.g. as, in both cases, (-1)+(-1)=-2). The sixth and seventh intermediate output values 404-6 and 404-7 will be associated with a discrepancy of 0 (i.e. the discrepancies will have been cancelled, e.g. as, in both cases, (-2)-(-2)=0).

In a yet further example of the "manner" in which input values can be generated, for at least one CEM of the plurality of different CEMs, the decoder may be configured to generate a plurality of input values comprising at least one sign extended input value. For example, some of the inputs of the logic circuit may have a fixed bit-width. For example, the first and/or second adders 408-1 and 408-2 may require input values of a fixed bit-width (e.g. 9-bits, for example). The ASTC Specification may define at least one input value to be operated on in accordance with a certain CEM of the plurality of CEMs that is a signed bit string comprising a number of bits that is less than the fixed bit-width. In this case, in order to enable that signed bit string to be operated on by the logic circuit 312, that signed bit string can be sign extended. That is, that signed bit string can be padded by repeating its most significant bit (MSB) up to the fixed bit-width. Sign extending a signed bit string does not change the value of that signed bit string. For example, the signed bit string [1, 0, 1] has a value of - 3 (i.e. as (-4)+1=(-3)), whilst the sign extended signed bit string [1, 1, 1, 1, 0, 1] also has a value of - 3 (i.e. as (-32)+16+8+4+1=(-3)). This is more hardware efficient (e.g. requires a smaller chip area) than providing a separate a logic circuit that has one or more operational units with a different fixed bit-width to operate on these "narrow" signed bit strings. As will be shown in the detailed examples below, this technique can be used when the selected CEM is any of CEMs 11, 14 or 15.

The decoder (e.g. decoder 300) is configured to input the plurality of generated input values to the multiple inputs of the logic circuit (e.g. logic circuit 312), the logic circuit being configured to operate on said plurality of input values so as to generate at least one intermediate output value for use in calculating colour endpoints in accordance with the selected CEM. The one or more operational units (e.g. the adders and subtractors shown in Figure 4) of the logic circuit may be configured to perform the same operation(s) on input values received at the multiple inputs of the logic circuit for different CEMs of the plurality of CEMs. More specifically, the one or more operational units (e.g. adders, subtractors, etc) of the logic circuit may be configured to perform the same operation(s) on input values received at the multiple inputs of the logic circuit regardless of which CEM of the plurality of CEMs is selected.

The decoder (e.g. decoder 300) is configured to determine a colour endpoint pair in accordance with the selected CEM in dependence on said at least one intermediate output value. Said intermediate output value(s) may be intermediate value(s) defined in the ASTC specification, or representative of intermediate value(s) defined in the ASTC specification. For example, when the selected CEM is CEM 8 or CEM 12, the sixth and seventh intermediate output values 404-6 and 404-7 can be the intermediate values s0 and s1 - as defined in Sections 23.14.6 and 23.14.9 of the ASTC Specification. The operations performed using said intermediate output value(s) in order to determine a pair of colour endpoints are also defined in the ASTC Specification. Some specific examples of the operations performed using intermediate output value(s) output by the logic circuit 312 are given the specific examples described below.

The decoder (e.g. decoder 300) is configured to decode the texel in dependence on the determined colour endpoint pair. For example, this decoding step can be performed by the interpolator unit 308 of decoder 300 - in the manner described herein. Examples of interpolating between a respective pair of colour endpoints using the interpolate weight for a texel are described above - and so are not repeated here for conciseness.

To aid the skilled persons understanding, a number of specific examples are provided below which specify, for different CEMs of the abovementioned plurality of CEMs, the plurality of input values that the decoder can be configured to generate for the multiple inputs of logic circuit 312, and how a colour endpoint pair can be determined in dependence on at least one of the resultant intermediate output values.

### CEM 7

CEM 7 is defined in Section 23.15.3 of the ASTC Specification referred to herein. When the selected CEM is CEM 7, the decoder (e.g. decoder 300) can be configured to generate a plurality of input values in the manner shown in Table 1 for the multiple inputs of the logic circuit 312 shown in Figure 4. In Table 1, the least significant bit (LSB) of each bit string input value is shown in the right-hand column. In Table 1, V_{X}^{Y} refers to the Y^{th} bit of the X^{th} colour value associated with the partition using CEM 7 decoded from the block of encoded texture data. As described herein, CEM 7 has six modes, enumerated modes 0 to 5, using zero indexing. The manner in which the plurality of inputs can be generated for each mode of CEM 7 are shown in Table 1. Each input value is a signed input value. Each of the first, second, third, fourth, sixth, eighth, ninth and tenth input values 402-1, 402-2, 402-3, 402-4, 402-6, 402-8, 402-9 and 402-10 are bit strings (e.g. sequences of bits) generated using bits selected from colour values encoded in the data block in the manner specified in Section 23.15.3 of the ASTC Specification referred to herein. The first, third and ninth input values 402-1, 402-3 and 402-9 are equal. The first, third and ninth input values 402-1, 402-3 and 402-9 are the "major component" referred to in Section 23.15.3 of the ASTC Specification. The second and fourth input values 402-2 and 402-4 specify how much needs to be subtracted from the "major component" to determine the "minor components" referred to in Section 23.15.3 of the ASTC Specification. The sixth, eighth and tenth input values 402-6, 402-8 and 402-10 are equal. The sixth, eighth and tenth input values 402-6, 402-8 and 402-10 are the "scale" referred to in Section 23.15.3 of the ASTC Specification. The decoder is configured to generate a value of zero as the fifth input value 402-5, such that the third intermediate output value 404-3 will be equal to the sixth input value 402-6. The decoder is configured to generate a value of zero as the seventh input value 402-7, such that the fourth intermediate output value 404-4 will be equal to the eighth input value 402-8. That is, the decoder is configured to use the technique described herein with reference to Figure 5B to effectively pass the sixth and eighth input values 402-6 and 402-8 through the first and second adders 408-1 and 408-2, respectively. The first, third and ninth input values 402-1, 402-3 and 402-9 are 13-bit signals. Each of the other input values are 9-bit signals.

**Table 1: Input values for CEM 7**

| **First input value 402-1** | | | | | | | | | | | | | |
|---|---|---|---|---|---|---|---|---|---|---|---|---|---|
| *Mode* | Signed bit string | | | | | | | | | | | | |
| *0* | 0 | 0 | V₂⁵ | V₁⁶ | V₁⁵ | V₂⁶ | V₃⁷ | V₀⁵ | V₀⁴ | V₀³ | V₀² | V₀¹ | V₀⁰ |
| *1* | 0 | 0 | V₃⁶ | V₃⁵ | V₁⁶ | V₂⁶ | V₃⁷ | V₀⁵ | V₀⁴ | V₀³ | V₀² | V₀¹ | V₀⁰ |
| *2* | 0 | 0 | 0 | V₁⁶ | V₁⁵ | V₂⁶ | V₂⁵ | V₀⁵ | V₀⁴ | V₀³ | V₀² | V₀¹ | V₀⁰ |
| *3* | 0 | 0 | 0 | 0 | V₁⁶ | V₂⁶ | V₃⁷ | V₀⁵ | V₀⁴ | V₀³ | V₀² | V₀¹ | V₀⁰ |
| *4* | 0 | 0 | 0 | 0 | 0 | V₃⁶ | V₃⁷ | V₀⁵ | V₀⁴ | V₀³ | V₀² | V₀¹ | V₀⁰ |
| *5* | 0 | 0 | 0 | 0 | 0 | 0 | V₃⁷ | V₀⁵ | V₀⁴ | V₀³ | V₀² | V₀¹ | V₀⁰ |

| **Second input value 402-2** | | | | | | | | | | | | | |
|---|---|---|---|---|---|---|---|---|---|---|---|---|---|
| *Mode* | Signed bit string | | | | | | | | | | | | |
| *0* | - | - | - | - | 0 | 0 | 0 | 0 | V₁⁴ | V₁³ | V₁² | V₁¹ | V₁⁰ |
| *1* | - | - | - | - | 0 | 0 | 0 | V₁⁵ | V₁⁴ | V₁³ | V₁² | V₁¹ | V₁⁰ |
| *2* | - | - | - | - | 0 | 0 | 0 | 0 | V₁⁴ | V₁³ | V₁² | V₁¹ | V₁⁰ |
| *3* | - | - | - | - | 0 | 0 | 0 | V₁⁵ | V₁⁴ | V₁³ | V₁² | V₁¹ | V₁⁰ |
| *4* | - | - | - | - | 0 | 0 | V₁⁶ | V₁⁵ | V₁⁴ | V₁³ | V₁² | V₁¹ | V₁⁰ |
| *5* | - | - | - | - | 0 | 0 | V₁⁶ | V₁⁵ | V₁⁴ | V₁³ | V₁² | V₁¹ | V₁⁰ |

| **Third input value 402-3** | | | | | | | | | | | | | |
|---|---|---|---|---|---|---|---|---|---|---|---|---|---|
| *Mode* | Signed bit string | | | | | | | | | | | | |
| *0* | 0 | 0 | V₂⁵ | V₁⁶ | V₁⁵ | V₂⁶ | V₃⁷ | V₀⁵ | V₀⁴ | V₀³ | V₀² | V₀¹ | V₀⁰ |
| 1 | 0 | 0 | V₃⁶ | V₃⁵ | V₁⁶ | V₂⁶ | V₃⁷ | V₀⁵ | V₀⁴ | V₀³ | V₀² | V₀¹ | V₀⁰ |
| 2 | 0 | 0 | 0 | V₁⁶ | V₁⁵ | V₂⁶ | V₂⁵ | V₀⁵ | V₀⁴ | V₀³ | V₀² | V₀¹ | V₀⁰ |
| 3 | 0 | 0 | 0 | 0 | V₁⁶ | V₂⁶ | V₃⁷ | V₀⁵ | V₀⁴ | V₀³ | V₀² | V₀¹ | V₀⁰ |
| 4 | 0 | 0 | 0 | 0 | 0 | V₃⁶ | V₃⁷ | V₀⁵ | V₀⁴ | V₀³ | V₀² | V₀¹ | V₀⁰ |
| 5 | 0 | 0 | 0 | 0 | 0 | 0 | V₃⁷ | V₀⁵ | V₀⁴ | V₀³ | V₀² | V₀¹ | V₀⁰ |

| **Fourth input value 402-4** | | | | | | | | | | | | | |
|---|---|---|---|---|---|---|---|---|---|---|---|---|---|
| *Mode* | Signed bit string | | | | | | | | | | | | |
| *0* | - | - | - | - | 0 | 0 | 0 | 0 | V₂⁴ | V₂³ | V₂² | V₂¹ | V₂⁰ |
| *1* | - | - | - | - | 0 | 0 | 0 | V₂⁵ | V₂⁴ | V₂³ | V₂² | V₂¹ | V₂⁰ |
| *2* | - | - | - | - | 0 | 0 | 0 | 0 | V₂⁴ | V₂³ | V₂² | V₂¹ | V₂⁰ |
| *3* | - | - | - | - | 0 | 0 | 0 | V₂⁵ | V₂⁴ | V₂³ | V₂² | V₂¹ | V₂⁰ |
| *4* | - | - | - | - | 0 | 0 | V₂⁶ | V₂⁵ | V₂⁴ | V₂³ | V₂² | V₂¹ | V₂⁰ |
| 5 | - | - | - | - | 0 | 0 | V₂⁶ | V₂⁵ | V₂⁴ | V₂³ | V₂² | V₂¹ | V₂⁰ |

| **Fifth input value 402-5** | | | | | | | | | | | | | |
|---|---|---|---|---|---|---|---|---|---|---|---|---|---|
| *Mode* | Signed bit string | | | | | | | | | | | | |
| *0-5* | - | - | - | - | 0 | 0 | 0 | 0 | 0 | 0 | 0 | 0 | 0 |

| **Sixth input value 402-6** | | | | | | | | | | | | | |
|---|---|---|---|---|---|---|---|---|---|---|---|---|---|
| *Mode* | Signed bit string | | | | | | | | | | | | |
| *0* | - | - | - | - | 0 | 0 | V₃⁶ | V₃⁵ | V₃⁴ | V₃³ | V₃² | V₃¹ | V₃⁰ |
| *1* | - | - | - | - | 0 | 0 | 0 | 0 | V₃⁴ | V₃³ | V₃² | V₃¹ | V₃⁰ |
| *2* | - | - | - | - | 0 | V₃⁷ | V₃⁶ | V₃⁵ | V₃⁴ | V₃³ | V₃² | V₃¹ | V₃⁰ |
| *3* | - | - | - | - | 0 | 0 | V₃⁶ | V₃⁵ | V₃⁴ | V₃³ | V₃² | V₃¹ | V₃⁰ |
| *4* | - | - | - | - | 0 | 0 | 0 | V₃⁵ | V₃⁴ | V₃³ | V₃² | V₃¹ | V₃⁰ |
| *5* | - | - | - | - | 0 | 0 | V₃⁶ | V₃⁵ | V₃⁴ | V₃³ | V₃² | V₃¹ | V₃⁰ |

| **Seventh input value 402-7** | | | | | | | | | | | | | |
|---|---|---|---|---|---|---|---|---|---|---|---|---|---|
| *Mode* | Signed bit string | | | | | | | | | | | | |
| *0-5* | - | - | - | - | 0 | 0 | 0 | 0 | 0 | 0 | 0 | 0 | 0 |

| **Eighth input value 402-8** | | | | | | | | | | | | | |
|---|---|---|---|---|---|---|---|---|---|---|---|---|---|
| *Mode* | Signed bit string | | | | | | | | | | | | |
| *0* | - | - | - | - | 0 | 0 | V₃⁶ | V₃⁵ | V₃⁴ | V₃³ | V₃² | V₃¹ | V₃⁰ |
| *1* | - | - | - | - | 0 | 0 | 0 | 0 | V₃⁴ | V₃³ | V₃² | V₃¹ | V₃⁰ |
| *2* | - | - | - | - | 0 | V₃⁷ | V₃⁶ | V₃⁵ | V₃⁴ | V₃³ | V₃² | V₃¹ | V₃⁰ |
| *3* | - | - | - | - | 0 | 0 | V₃⁶ | V₃⁵ | V₃⁴ | V₃³ | V₃² | V₃¹ | V₃⁰ |
| *4* | - | - | - | - | 0 | 0 | 0 | V₃⁵ | V₃⁴ | V₃³ | V₃² | V₃¹ | V₃⁰ |
| *5* | - | - | - | - | 0 | 0 | V₃⁶ | V₃⁵ | V₃⁴ | V₃³ | V₃² | V₃¹ | V₃⁰ |

| **Ninth input value 402-9** | | | | | | | | | | | | | |
|---|---|---|---|---|---|---|---|---|---|---|---|---|---|
| *Mode* | Signed bit string | | | | | | | | | | | | |
| *0* | 0 | 0 | V₂⁵ | V₁⁶ | V₁⁵ | V₂⁶ | V₃⁷ | V₀⁵ | V₀⁴ | V₀³ | V₀² | V₀¹ | V₀⁰ |
| *1* | 0 | 0 | V₃⁶ | V₃⁵ | V₁⁶ | V₂⁶ | V₃⁷ | V₀⁵ | V₀⁴ | V₀³ | V₀² | V₀¹ | V₀⁰ |
| *2* | 0 | 0 | 0 | V₁⁶ | V₁⁵ | V₂⁶ | V₂⁵ | V₀⁵ | V₀⁴ | V₀³ | V₀² | V₀¹ | V₀⁰ |
| *3* | 0 | 0 | 0 | 0 | V₁⁶ | V₂⁶ | V₃⁷ | V₀⁵ | V₀⁴ | V₀³ | V₀² | V₀¹ | V₀⁰ |
| *4* | 0 | 0 | 0 | 0 | 0 | V₃⁶ | V₃⁷ | V₀⁵ | V₀⁴ | V₀³ | V₀² | V₀¹ | V₀⁰ |
| *5* | 0 | 0 | 0 | 0 | 0 | 0 | V₃⁷ | V₀⁵ | V₀⁴ | V₀³ | V₀² | V₀¹ | V₀⁰ |

| **Tenth input value 402-10** | | | | | | | | | | | | | |
|---|---|---|---|---|---|---|---|---|---|---|---|---|---|
| *Mode* | Signed bit string | | | | | | | | | | | | |
| *0* | - | - | - | - | 0 | 0 | V₃⁶ | V₃⁵ | V₃⁴ | V₃³ | V₃² | V₃¹ | V₃⁰ |
| *1* | - | - | - | - | 0 | 0 | 0 | 0 | V₃⁴ | V₃³ | V₃² | V₃¹ | V₃⁰ |
| *2* | - | - | - | - | 0 | V₃⁷ | V₃⁶ | V₃⁵ | V₃⁴ | V₃³ | V₃² | V₃¹ | V₃⁰ |
| *3* | - | - | - | - | 0 | 0 | V₃⁶ | V₃⁵ | V₃⁴ | V₃³ | V₃² | V₃¹ | V₃⁰ |
| *4* | - | - | - | - | 0 | 0 | 0 | V₃⁵ | V₃⁴ | V₃³ | V₃² | V₃¹ | V₃⁰ |
| *5* | - | - | - | - | 0 | 0 | V₃⁶ | V₃⁵ | V₃⁴ | V₃³ | V₃² | V₃¹ | V₃⁰ |

When the logic circuit 312 operates on the plurality of input values specified in Table 1, the first, second, fifth, sixth and seventh intermediate output values 404-1, 404-2, 404-5, 404-6 and 404-7 of the logic circuit 312 can be used in determining a colour endpoint pair in accordance with CEM 7. More specifically, the first, second, fifth, sixth and seventh intermediate output values 404-1, 404-2, 404-5, 404-6 and 404-7, in addition to a further value equal to the first input value 402-1, are used to determine the values of the respective colour channels of the first colour endpoint ("e0") and second ("e1") colour endpoint of the colour endpoint pair in accordance with CEM 7.

First, each of these values can be assigned to a colour channel of one of the colour endpoints. The decoder (e.g. decoder 300) can be configured to perform this "assignment" operation. The further ("major") value equal to the first input value 402-1, the first intermediate output ("first minor") value 404-1 and the second intermediate output ("second minor") value 404-2 can be assigned to channels of the first colour endpoint. The fifth intermediate output ("major") value 404-5, sixth intermediate output ("first minor) value 404-6 and seventh intermediate output ("second minor") value 404-7 can be assigned to channels of the second colour endpoint.

The way these values are assigned to the channels is determined by a factor referred to as the "major component index". For CEM 7, the "major component index" and a further factor termed "shift" can be derived from a 4-bit variable M composed of the 2 MSB's of V₀, the MSB of V₁ and the MSB of V₂ (M = [V₂⁷, V₁⁷, V₀⁷, V₀⁶]). Every value of this variable M can be decoded to a value of the "major component index" and a value of "shift", as described in further detail in Section 23.15.3 of the ASTC Specification referred to herein.

If the "major component index" is 0: the "major", "first minor" and "second minor" values are assigned to the R, G and B channels, respectively, of the first and second colour endpoints. If the "major component index" is 1: the "major", "first minor" and "second minor" values are assigned to the G, R and B channels, respectively, of the first and second colour endpoints. If the "major component index" is 2: the "major", "first minor" and "second minor" values are assigned to the B, G and R channels, respectively, of the first and second colour endpoints.

Next, the values assigned to the channels can then be left-shifted by the value of "shift". The decoder (e.g. decoder 300) can be configured to perform these "shift" operations. Because the channels of each endpoint are the result of a subtraction, they can become negative; if this is the case, the channel can be "clamped" to zero, i.e. set to zero. Similarly, because the numbers in some of the subtractions are signed, some of the channels may become greater than the largest number representable by 12 bits; if this is the case, this channel can be clamped to the largest value (4095). The decoder (e.g. decoder 300) can be configured to perform these "clamping" operations. In some examples, the underflow (zero) clamping can be applied before left-shifting according to the "shift" value, and the overflow (4095) clamping can be applied after left-shifting according to the "shift" value. In particular, underflow clamping can be applied to the first, second, fifth, sixth and seventh intermediate output values 404-1, 404-2, 404-5, 404-6 and 404-7. The further value equal to the first input value 402-1 need not be clamped.

### CEMs 11, 14 and 15

CEMs 11, 14 and 15 are defined in Sections 23.15.4, 23.15.5 and 23.15.6 of the ASTC Specification referred to herein. When the selected CEM is any of CEMs 11, 14 or 15, the decoder (e.g. decoder 300) can be configured to generate a plurality of input values in the manner shown in Table 2 for the multiple inputs of the logic circuit 312 shown in Figure 4. In Table 2, the least significant bit (LSB) of each bit string input value is shown in the right-hand column. In Table 2, V_{X}^{Y} refers to the Y^{th} bit of the X^{th} colour value associated with the partition using CEM 11, 14 or 15, respectively, decoded from the block of encoded texture data. As described herein, CEMs 11, 14 and 15 have eight modes, enumerated modes 0 to 7, using zero indexing. The manner in which the plurality of inputs can be generated for each mode of CEMs 11, 14 and 15 are shown in Table 2. Each input value is a signed input value. Each of the second, fourth, sixth, eighth, ninth and tenth input values 402-2, 402-4, 402-6, 402-8, 402-9 and 402-10 are bit strings (e.g. sequences of bits) generated using bits selected from colour values encoded in the data block in the manner specified in Sections 23.15.4, 23.15.5 and 23.15.6 of the ASTC Specification referred to herein. Other than in mode 5, the first and third input values 402-1 and 402-3 are also bit strings (e.g. sequences of bits) generated using bits selected from colour values encoded in the data block in the manner specified in Sections 23.15.4, 23.15.5 and 23.15.6 of the ASTC Specification referred to herein. Other than in mode 5, each of the first, third and ninth input values 402-1, 402-3 and 402-9 are equal. Other than in mode 5, each of the first, third and ninth input values 402-1, 402-3 and 402-9 are the "major component" referred to in Sections 23.15.4, 23.15.5 and 23.15.6 of the ASTC Specification. Each of the sixth, eighth and tenth input values 402-6, 402-8 and 402-9 are equal. In mode 5, the ninth input value 402-9 is the "major component" referred to in Sections 23.15.4, 23.15.5 and 23.15.6 of the ASTC Specification. In mode 5, the decoder is configured to generate the first and second input values 402-1 and 402-2 such that the first input value 402-1 has a value double that of the second input value 402-2 in order that the first intermediate output value 404-1 will be equal to the second input value 402-2. Said first input value 402-1 can be generated by left-shifting the second input value 402-2 by one bit - as shown in Table 2. Also in mode 5, the decoder is configured to generate the third and fourth input values 402-3 and 402-4 such that the third input value 402-3 has a value double that of the fourth input value 402-4 in order that the second intermediate output value 404-2 will be equal to the fourth input value 402-4. Said third input value 402-3 can be generated by left-shifting the fourth input value 402-4 by one bit - as shown in Table 2. That is, the decoder is configured to use the technique described herein with reference to Figure 5A. The first, third and ninth input values 402-1, 402-3 and 402-9 are 13-bit signals. Each of the other input values are 9-bit signals. The fifth and seventh input values 402-5 and 402-7 are derived from "narrow" signed bit strings (e.g. sequences of bits) generated using bits selected from colour values encoded in the data block in the manner specified in Sections 23.15.4, 23.15.5 and 23.15.6 of the ASTC Specification, those "narrow" signed bit strings being sign extended so as to fit into the fixed 9-bit signal inputs of the first and second adders 408-1 and 408-2.

**Table 2: Input values for CEMs 11, 14 and 15**

| **First input value 402-1** | | | | | | | | | | | | | |
|---|---|---|---|---|---|---|---|---|---|---|---|---|---|
| *Mode* | Signed bit string | | | | | | | | | | | | |
| *0* | 0 | 0 | 0 | 0 | V₁⁶ | V₀⁷ | V₀⁶ | V₀⁵ | V₀⁴ | V₀³ | V₀² | V₀¹ | V₀⁰ |
| 1 | 0 | 0 | 0 | 0 | V₁⁶ | V₀⁷ | V₀⁶ | V₀⁵ | V₀⁴ | V₀³ | V₀² | V₀¹ | V₀⁰ |
| *2* | 0 | 0 | 0 | V₂⁶ | V₁⁶ | V₀⁷ | V₀⁶ | V₀⁵ | V₀⁴ | V₀³ | V₀² | V₀¹ | V₀⁰ |
| *3* | 0 | 0 | 0 | V₄6 | V₁⁶ | V₀⁷ | V₀⁶ | V₀⁵ | V₀⁴ | V₀³ | V₀² | V₀¹ | V₀⁰ |
| *4* | 0 | 0 | V₅⁵ | V₄⁵ | V₁⁶ | V₀⁷ | V₀⁶ | V₀⁵ | V₀⁴ | V₀³ | V₀² | V₀¹ | V₀⁰ |
| ***5*** | **0** | **0** | **0** | **0** | **0** | **0** | **V₂⁵** | **V₂⁴** | **V₂³** | **V₂²** | **V₂¹** | **V₂⁰** | **0** |
| *6* | 0 | V₄⁶ | V₅⁵ | V₄⁵ | V₁⁶ | V₀⁷ | V₀⁶ | V₀⁵ | V₀⁴ | V₀³ | V₀² | V₀¹ | V₀⁰ |
| *7* | 0 | V₄⁶ | V₃⁶ | V₂⁶ | V₁⁶ | V₀⁷ | V₀⁶ | V₀⁵ | V₀⁴ | V₀³ | V₀² | V₀¹ | V₀⁰ |

| **Second input value 402-2** | | | | | | | | | | | | | |
|---|---|---|---|---|---|---|---|---|---|---|---|---|---|
| *Mode* | Signed bit string | | | | | | | | | | | | |
| *0* | - | - | - | - | 0 | 0 | V₂⁶ | V₂⁵ | V₂⁴ | V₂³ | V₂² | V₂¹ | V₂⁰ |
| *1* | - | - | - | - | 0 | V₄⁶ | V₂⁶ | V₂⁵ | V₂⁴ | V₂³ | V₂² | V₂¹ | V₂⁰ |
| *2* | - | - | - | - | 0 | 0 | 0 | V₂⁵ | V₂⁴ | V₂³ | V₂² | V₂¹ | V₂⁰ |
| *3* | - | - | - | - | 0 | 0 | V₂⁶ | V₂⁵ | V₂⁴ | V₂³ | V₂² | V₂¹ | V₂⁰ |
| *4* | - | - | - | - | 0 | V₄⁶ | V₂⁶ | V₂⁵ | V₂⁴ | V₂³ | V₂² | V₂¹ | V₂⁰ |
| *5* | - | - | - | - | 0 | 0 | 0 | V₂⁵ | V₂⁴ | V₂³ | V₂² | V₂¹ | V₂⁰ |
| *6* | - | - | - | - | 0 | 0 | V₂⁶ | V₂⁵ | V₂⁴ | V₂³ | V₂² | V₂¹ | V₂⁰ |
| *7* | - | - | - | - | 0 | 0 | 0 | V₂⁵ | V₂⁴ | V₂³ | V₂² | V₂¹ | V₂⁰ |

| **Third input value 402-3** | | | | | | | | | | | | | |
|---|---|---|---|---|---|---|---|---|---|---|---|---|---|
| *Mode* | Signed bit string | | | | | | | | | | | | |
| *0* | 0 | 0 | 0 | 0 | V₁⁶ | V₀⁷ | V₀⁶ | V₀⁵ | V₀⁴ | V₀³ | V₀² | V₀¹ | V₀⁰ |
| *1* | 0 | 0 | 0 | 0 | V₁⁶ | V₀⁷ | V₀⁶ | V₀⁵ | V₀⁴ | V₀³ | V₀² | V₀¹ | V₀⁰ |
| *2* | 0 | 0 | 0 | V₂⁶ | V₁⁶ | V₀⁷ | V₀⁶ | V₀⁵ | V₀⁴ | V₀³ | V₀² | V₀¹ | V₀⁰ |
| *3* | 0 | 0 | 0 | V₄⁶ | V₁⁶ | V₀⁷ | V₀⁶ | V₀⁵ | V₀⁴ | V₀³ | V₀² | V₀¹ | V₀⁰ |
| *4* | 0 | 0 | V₅⁵ | V₄⁵ | V₁⁶ | V₀⁷ | V₀⁶ | V₀⁵ | V₀⁴ | V₀³ | V₀² | V₀¹ | V₀⁰ |
| ***5*** | **0** | **0** | **0** | **0** | **0** | **0** | **V₃⁵** | **V₃⁴** | **V₃³** | **V₃²** | **V₃¹** | **V₃⁰** | **0** |
| *6* | 0 | V₄⁶ | V₅⁵ | V₄⁵ | V₁⁶ | V₀⁷ | V₀⁶ | V₀⁵ | V₀⁴ | V₀³ | V₀² | V₀¹ | V₀⁰ |
| *7* | 0 | V₄⁶ | V₃⁶ | V₂⁶ | V₁⁶ | V₀⁷ | V₀⁶ | V₀⁵ | V₀⁴ | V₀³ | V₀² | V₀¹ | V₀⁰ |

| **Fourth input value 402-4** | | | | | | | | | | | | | |
|---|---|---|---|---|---|---|---|---|---|---|---|---|---|
| *Mode* | Signed bit string | | | | | | | | | | | | |
| *0* | - | - | - | - | 0 | 0 | V₃⁶ | V₃⁵ | V₃⁴ | V₃³ | V₃² | V₃¹ | V₃⁰ |
| *1* | - | - | - | - | 0 | V₅⁶ | V₃⁶ | V₃⁵ | V₃⁴ | V₃³ | V₃² | V₃¹ | V₃⁰ |
| *2* | - | - | - | - | 0 | 0 | 0 | V₃⁵ | V₃⁴ | V₃³ | V₃² | V₃¹ | V₃⁰ |
| *3* | - | - | - | - | 0 | 0 | V₃⁶ | V₃⁵ | V₃⁴ | V₃³ | V₃² | V₃¹ | V₃⁰ |
| *4* | - | - | - | - | 0 | V₅⁶ | V₃⁶ | V₃⁵ | V₃⁴ | V₃³ | V₃² | V₃¹ | V₃⁰ |
| *5* | - | - | - | - | 0 | 0 | 0 | V₃⁵ | V₃⁴ | V₃³ | V₃² | V₃¹ | V₃⁰ |
| *6* | - | - | - | - | 0 | 0 | V₃⁶ | V₃⁵ | V₃⁴ | V₃³ | V₃² | V₃¹ | V₃⁰ |
| *7* | - | - | - | - | 0 | 0 | 0 | V₃⁵ | V₃⁴ | V₃³ | V₃² | V₃¹ | V₃⁰ |

| **Fifth input value 402-5** | | | | | | | | | | | | | |
|---|---|---|---|---|---|---|---|---|---|---|---|---|---|
| *Mode* | Signed bit string | | | | | | | | | | | | |
| *0* | - | - | - | - | V₄⁶ | V₄⁶ | V₄⁶ | V₄⁵ | V₄⁴ | V₄³ | V₄² | V₄¹ | V₄⁰ |
| *1* | - | - | - | - | V₄⁵ | V₄⁵ | V₄⁵ | V₄⁵ | V₄⁴ | V₄³ | V₄² | V₄¹ | V₄⁰ |
| *2* | - | - | - | - | V₄⁶ | V₄⁶ | V₄⁶ | V₄⁵ | V₄⁴ | V₄³ | V₄² | V₄¹ | V₄⁰ |
| *3* | - | - | - | - | V₄⁵ | V₄⁵ | V₄⁵ | V₄⁵ | V₄⁴ | V₄³ | V₄² | V₄¹ | V₄⁰ |
| *4* | - | - | - | - | V₄⁴ | V₄⁴ | V₄⁴ | V₄⁴ | V₄⁴ | V₄³ | V₄² | V₄¹ | V₄⁰ |
| *5* | - | - | - | - | V₄⁵ | V₄⁵ | V₄⁵ | V₄⁵ | V₄⁴ | V₄³ | V₄² | V₄¹ | V₄⁰ |
| *6* | - | - | - | - | V₄⁴ | V₄⁴ | V₄⁴ | V₄⁴ | V₄⁴ | V₄³ | V₄² | V₄¹ | V₄⁰ |
| *7* | - | - | - | - | V₄⁵ | V₄⁵ | V₄⁵ | V₄⁵ | V₄⁴ | V₄³ | V₄² | V₄¹ | V₄⁰ |

| **Sixth input value 402-6** | | | | | | | | | | | | | |
|---|---|---|---|---|---|---|---|---|---|---|---|---|---|
| *Mode* | Signed bit string | | | | | | | | | | | | |
| *0* | - | - | - | - | 0 | 0 | 0 | V₁⁵ | V₁⁴ | V₁³ | V₁² | V₁¹ | V₁⁰ |
| *1* | - | - | - | - | 0 | 0 | 0 | V₁⁵ | V₁⁴ | V₁³ | V₁² | V₁¹ | V₁⁰ |
| *2* | - | - | - | - | 0 | 0 | V₃⁶ | V₁⁵ | V₁⁴ | V₁³ | V₁² | V₁¹ | V₁⁰ |
| *3* | - | - | - | - | 0 | 0 | V₅⁶ | V₁⁵ | V₁⁴ | V₁³ | V₁² | V₁¹ | V₁⁰ |
| *4* | - | - | - | - | 0 | 0 | 0 | V₁⁵ | V₁⁴ | V₁³ | V₁² | V₁¹ | V₁⁰ |
| *5* | - | - | - | - | 0 | V₄⁶ | V₅⁶ | V₁⁵ | V₁⁴ | V₁³ | V₁² | V₁¹ | V₁⁰ |
| *6* | - | - | - | - | 0 | 0 | V₅⁶ | V₁⁵ | V₁⁴ | V₁³ | V₁² | V₁¹ | V₁⁰ |
| *7* | - | - | - | - | 0 | 0 | V₅⁶ | V₁⁵ | V₁⁴ | V₁³ | V₁² | V₁¹ | V₁⁰ |

| **Seventh input value 402-7** | | | | | | | | | | | | | |
|---|---|---|---|---|---|---|---|---|---|---|---|---|---|
| *Mode* | Signed bit string | | | | | | | | | | | | |
| *0* | - | - | - | - | V₅⁶ | V₅⁶ | V₅⁶ | V₅⁵ | V₅⁴ | V₅³ | V₅² | V₅¹ | V₅⁰ |
| *1* | - | - | - | - | V₅⁵ | V₅⁵ | V₅⁵ | V₅⁵ | V₅⁴ | V₅³ | V₅² | V₅¹ | V₅⁰ |
| *2* | - | - | - | - | V₅⁶ | V₅⁶ | V₅⁶ | V₅⁵ | V₅⁴ | V₅³ | V₅² | V₅¹ | V₅⁰ |
| *3* | - | - | - | - | V₅⁵ | V₅⁵ | V₅⁵ | V₅⁵ | V₅⁴ | V₅³ | V₅² | V₅¹ | V₅⁰ |
| *4* | - | - | - | - | V₅⁴ | V₅⁴ | V₅⁴ | V₅⁴ | V₅⁴ | V₅³ | V₅² | V₅¹ | V₅⁰ |
| *5* | - | - | - | - | V₅⁵ | V₅⁵ | V₅⁵ | V₅⁵ | V₅⁴ | V₅³ | V₅² | V₅¹ | V₅⁰ |
| *6* | - | - | - | - | V₅⁴ | V₅⁴ | V₅⁴ | V₅⁴ | V₅⁴ | V₅³ | V₅² | V₅¹ | V₅⁰ |
| *7* | - | - | - | - | V₅⁵ | V₅⁵ | V₅⁵ | V₅⁵ | V₅⁴ | V₅³ | V₅² | V₅¹ | V₅⁰ |

| **Eighth input value 402-8** | | | | | | | | | | | | | |
|---|---|---|---|---|---|---|---|---|---|---|---|---|---|
| *Mode* | Signed bit string | | | | | | | | | | | | |
| *0* | - | - | - | - | 0 | 0 | 0 | V₁⁵ | V₁⁴ | V₁³ | V₁² | V₁¹ | V₁⁰ |
| *1* | - | - | - | - | 0 | 0 | 0 | V₁⁵ | V₁⁴ | V₁³ | V₁² | V₁¹ | V₁⁰ |
| *2* | - | - | - | - | 0 | 0 | V₃⁶ | V₁⁵ | V₁⁴ | V₁³ | V₁² | V₁¹ | V₁⁰ |
| *3* | - | - | - | - | 0 | 0 | V₅⁶ | V₁⁵ | V₁⁴ | V₁³ | V₁² | V₁¹ | V₁⁰ |
| *4* | - | - | - | - | 0 | 0 | 0 | V₁⁵ | V₁⁴ | V₁³ | V₁² | V₁¹ | V₁⁰ |
| *5* | - | - | - | - | 0 | V₄⁶ | V₅⁶ | V₁⁵ | V₁⁴ | V₁³ | V₁² | V₁¹ | V₁⁰ |
| *6* | - | - | - | - | 0 | 0 | V₅⁶ | V₁⁵ | V₁⁴ | V₁³ | V₁² | V₁¹ | V₁⁰ |
| *7* | - | - | - | - | 0 | 0 | V₅⁶ | V₁⁵ | V₁⁴ | V₁³ | V₁² | V₁¹ | V₁⁰ |

| **Ninth input value 402-9** | | | | | | | | | | | | | |
|---|---|---|---|---|---|---|---|---|---|---|---|---|---|
| *Mode* | Signed bit string | | | | | | | | | | | | |
| *0* | 0 | 0 | 0 | 0 | V₁⁶ | V₀⁷ | V₀⁶ | V₀⁵ | V₀⁴ | V₀³ | V₀² | V₀¹ | V₀⁰ |
| *1* | 0 | 0 | 0 | 0 | V₁⁶ | V₀⁷ | V₀⁶ | V₀⁵ | V₀⁴ | V₀³ | V₀² | V₀¹ | V₀⁰ |
| *2* | 0 | 0 | 0 | V₂⁶ | V₁⁶ | V₀⁷ | V₀⁶ | V₀⁵ | V₀⁴ | V₀³ | V₀² | V₀¹ | V₀⁰ |
| *3* | 0 | 0 | 0 | V₄⁶ | V₁⁶ | V₀⁷ | V₀⁶ | V₀⁵ | V₀⁴ | V₀³ | V₀² | V₀¹ | V₀⁰ |
| *4* | 0 | 0 | V₅⁵ | V₄⁵ | V₁⁶ | V₀⁷ | V₀⁶ | V₀⁵ | V₀⁴ | V₀³ | V₀² | V₀¹ | V₀⁰ |
| *5* | 0 | 0 | V₃⁶ | V₂⁶ | V₁⁶ | V₀⁷ | V₀⁶ | V₀⁵ | V₀⁴ | V₀³ | V₀² | V₀¹ | V₀⁰ |
| *6* | 0 | V₄⁶ | V₅⁵ | V₄⁵ | V₁⁶ | V₀⁷ | V₀⁶ | V₀⁵ | V₀⁴ | V₀³ | V₀² | V₀¹ | V₀⁰ |
| *7* | 0 | V₄⁶ | V₃⁶ | V₂⁶ | V₁⁶ | V₀⁷ | V₀⁶ | V₀⁵ | V₀⁴ | V₀³ | V₀² | V₀¹ | V₀⁰ |

| **Tenth input value 402-10** | | | | | | | | | | | | | |
|---|---|---|---|---|---|---|---|---|---|---|---|---|---|
| *Mode* | Signed bit string | | | | | | | | | | | | |
| *0* | - | - | - | - | 0 | 0 | 0 | V₁⁵ | V₁⁴ | V₁³ | V₁² | V₁¹ | V₁⁰ |
| *1* | - | - | - | - | 0 | 0 | 0 | V₁⁵ | V₁⁴ | V₁³ | V₁² | V₁¹ | V₁⁰ |
| *2* | - | - | - | - | 0 | 0 | V₃⁶ | V₁⁵ | V₁⁴ | V₁³ | V₁² | V₁¹ | V₁⁰ |
| *3* | - | - | - | - | 0 | 0 | V₅⁶ | V₁⁵ | V₁⁴ | V₁³ | V₁² | V₁¹ | V₁⁰ |
| *4* | - | - | - | - | 0 | 0 | 0 | V₁⁵ | V₁⁴ | V₁³ | V₁² | V₁¹ | V₁⁰ |
| *5* | - | - | - | - | 0 | V₄⁶ | V₅⁶ | V₁⁵ | V₁⁴ | V₁³ | V₁² | V₁¹ | V₁⁰ |
| *6* | - | - | - | - | 0 | 0 | V₅⁶ | V₁⁵ | V₁⁴ | V₁³ | V₁² | V₁¹ | V₁⁰ |
| *7* | - | - | - | - | 0 | 0 | V₅⁶ | V₁⁵ | V₁⁴ | V₁³ | V₁² | V₁¹ | V₁⁰ |

When the logic circuit 312 operates on the plurality of input values specified in Table 2, the first, second, fifth, sixth and seventh intermediate output values 404-1, 404-2, 404-5, 404-6 and 404-7 of the logic circuit 312 can be used in determining a colour endpoint pair in accordance with any of CEMs 11, 14 or 15. More specifically, the first, second, fifth, sixth and seventh intermediate output values 404-1, 404-2, 404-5, 404-6 and 404-7, in addition to a further value equal to the ninth input value 402-9, are used to determine the values of the respective RGB colour channels of the first colour endpoint ("e0") and second colour endpoint ("e1") of the colour endpoint pair in accordance with any of CEMs 11, 14 or 15.

First, each of these values can be assigned to a colour channel of one of the colour endpoints. The decoder (e.g. decoder 300) can be configured to perform this "assignment" operation. The further ("major") value equal to the ninth input value 402-9, the first intermediate output ("first minor") value 404-1 and the second intermediate output ("second minor") value 404-2 can be assigned to channels of the first colour endpoint. The fifth intermediate output ("major") value 404-5, sixth intermediate output ("first minor) value 404-6 and seventh intermediate output ("second minor") value 404-7 can be assigned to channels of the second colour endpoint.

The way these values are assigned to the channels is determined by a factor referred to as the "major component index". For CEMs 11, 14 and 15, the "major component index" is composed of the MSB's of V₄ and V₅ (e.g. "major component index" = (V₅⁷, V₄⁷)).

If the "major component index" is 0: the "major", "first minor" and "second minor" values are assigned to the R, G and B channels, respectively, of the first and second colour endpoints. If the "major component index" is 1: the "major", "first minor" and "second minor" values are assigned to the G, R and B channels, respectively, of the first and second colour endpoints. If the "major component index" is 2: the "major", "first minor" and "second minor" values are assigned to the B, G and R channels, respectively, of the first and second colour endpoints. For completeness, if the "major component index" is 3: the RGB channels of both endpoints are directly derived from colour values V₀ through V₅ - and so the logic circuit 312 described herein need not be used.

Next, the values assigned to the channels can then be left-shifted by the value of "shift". For CEMs 11, 14 and 15, "shift" is composed of the MSB's of V₁, V₂ and V₃ ("shift" = (V₃⁷, V₂⁷, V₁⁷ The decoder (e.g. decoder 300) can be configured to perform these "shift" operations. Because the channels of each endpoint are the result of a subtraction, they can become negative; if this is the case, the channel can be "clamped" to zero, i.e. set to zero. Similarly, because the numbers in some of the subtractions are signed, some of the channels may become greater than the largest number representable by 12 bits; if this is the case, this channel can be clamped to the largest value (4095). The decoder (e.g. decoder 300) can be configured to perform these "clamping" operations. In some examples, the underflow (zero) clamping can be applied before left-shifting according to the "shift" value, and the overflow (4095) clamping can be applied after left-shifting according to the "shift" value. In particular, underflow clamping can be applied to the first, second, fifth, sixth and seventh intermediate output values 404-1, 404-2, 404-5, 404-6 and 404-7. The further value equal to the ninth input value 402-9 need not be clamped.

### CEMs 8 and 12

CEMs 8 and 12 are defined in Sections 23.14.6 and 23.14.9, respectively, of the ASTC Specification referred to herein. When the selected CEM is CEM 8 or 12, the decoder (e.g. decoder 300) can be configured to generate a plurality of input values in the manner shown in Table 3 for the multiple inputs of the logic circuit 312 shown in Figure 4. In Table 3, the least significant bit (LSB) of each bit string input value is shown in the right-hand column. In Table 3, V_{X}^{Y} refers to the Y^{th} bit of the X^{th} colour value associated with the partition using CEM 8 or 12, respectively, decoded from the block of encoded texture data. Each input value is a signed input value. In Table 3, an inverted bit is indicated using the symbol "~". For example: if V_{X}^{Y} is equal to 1, ~V_{X}^{Y} will be equal to 0; and if V_{X}^{Y} is equal to 0, ~V_{X}^{Y} will be equal to 1. A "~0" bit is the same as a "1" bit. Each of the second, fourth, fifth, sixth, seventh and eighth input values 402-2, 402-4, 402-5, 402-6, 402-7 and 402-8 are inverted input values as described herein. That is, each of the second, fourth, fifth, sixth, seventh and eighth input values 402-2, 402-4, 402-5, 402-6, 402-7 and 402-8 are generated by bit-inverting sequences of bits (selected in a manner specified in Sections 23.14.6 and 23.14.9 of the ASTC Specification referred to herein) from colour values encoded in the data block, without adding one to the values of said inverted input values. That is, each of these input values is associated with a deficit of "-1", as described herein. The decoder is also configured to generate values of -3 as the first and third input values 402-1 and 402-3, in order to compensate for said inverted input values. That is, the decoder is configured to use the technique described herein with reference to Figure 5C. The first and third input values 402-1 and 402-3 are 13-bit signals. Each of the other input values are 9-bit signals.

Table 3 does not show a ninth or tenth input value 402-9 or 402-10. That is, input values need not be generated for all of the multiple inputs of the logic circuit 312. When the selected CEM is CEM 8 or 12, the fifth intermediate output value 404-5 is not used to determine the colour endpoint pair, and thus the decoder need not generate any input values for the third subtractor 406-3. That is, no input values, or any arbitrary input values, could be generated for inputting to the third subtractor 406-3 - as any intermediate value it outputs will not be used.

**Table 3: Input values for CEMs 8 and 12**

| **First input value 402-1** (signed bit string) | | | | | | | | | | | | |
|---|---|---|---|---|---|---|---|---|---|---|---|---|
| 1 | 1 | 1 | 1 | 1 | 1 | 1 | 1 | 1 | 1 | 1 | 0 | 1 |

| **Second input value 402-2** (signed bit string) | | | | | | | | | | | | |
|---|---|---|---|---|---|---|---|---|---|---|---|---|
| - | - | - | - | ~0 | ~V₂⁷ | ~V₂⁶ | ~V₂⁵ | ~V₂⁴ | ~V₂³ | ~V₂² | ~V₂¹ | ~V₂⁰ |

| **Third input value 402-3** (signed bit string) | | | | | | | | | | | | |
|---|---|---|---|---|---|---|---|---|---|---|---|---|
| 1 | 1 | 1 | 1 | 1 | 1 | 1 | 1 | 1 | 1 | 1 | 0 | 1 |

| **Fourth input value 402-4** (signed bit string) | | | | | | | | | | | | |
|---|---|---|---|---|---|---|---|---|---|---|---|---|
| - | - | - | - | ~0 | ~V₃⁷ | ~V₃⁶ | ~V₃⁵ | ~V₃⁴ | ~V₃³ | ~V₃² | ~V₃¹ | ~V₃⁰ |

| **Fifth input value 402-5** (signed bit string) | | | | | | | | | | | | |
|---|---|---|---|---|---|---|---|---|---|---|---|---|
| - | - | - | - | ~0 | ~V₄⁷ | ~V₄⁶ | ~V₄⁵ | ~V₄⁴ | -V₄³ | ~V₄² | ~V₄¹ | ~V₄⁰ |

| **Sixth input value 402-6** (signed bit string) | | | | | | | | | | | | |
|---|---|---|---|---|---|---|---|---|---|---|---|---|
| - | - | - | - | ~0 | ~V₀⁷ | ~V₀⁶ | ~V₀⁵ | ~V₀⁴ | ~V₀³ | ~V₀² | ~V₀¹ | ~V₀⁰ |

| **Seventh input value 402-7** (signed bit string) | | | | | | | | | | | | |
|---|---|---|---|---|---|---|---|---|---|---|---|---|
| - | - | - | - | ~0 | ~V₅⁷ | ~V₅⁶ | ~V₅⁵ | ~V₅⁴ | ~V₅³ | ~V₅² | ~V₅¹ | ~V₅⁰ |

| **Eighth input value 402-8** (signed bit string) | | | | | | | | | | | | |
|---|---|---|---|---|---|---|---|---|---|---|---|---|
| - | - | - | - | ~0 | ~V₁⁷ | ~V₁⁶ | ~V₁⁵ | ~V₁⁴ | ~V₁³ | ~V₁² | ~V₁¹ | ~V₁⁰ |

When the logic circuit 312 operates on the plurality of input values specified in Table 3, the sixth and seventh intermediate output values 404-6 and 404-7 of the logic circuit 312 can be used in determining a colour endpoint pair in accordance with CEMs 8 or 12. The sixth and seventh intermediate output values 404-6 and 404-7 are the intermediate values "s0" and "s1", respectively - as defined in Sections 23.14.6 and 23.14.9 of the ASTC Specification referred to herein.

If s1 is larger than or equal to s0, the colour values V₀ through V₅ decoded form the encoded data block can be directly assigned to the RGB channels of the first colour endpoint ("e0") and second colour endpoint ("e1") of the colour endpoint pair. The assignment of colour values colour values V₀ through V₅ to the RGB channels of each of the two colour endpoints for CEMs 8 and 12 is defined in Sections 23.14.6 and 23.14.9, respectively, of the ASTC Specification referred to herein. For CEM 12, the colour values V₆ and V₇ decoded form the encoded data block can also be directly assigned to the A channels of the first and second colour endpoints - as defined in Section 23.14.9 of the ASTC Specification referred to herein.

If s0 is larger than s1, a "blue contract" operation is applied to the colour values V₀ through V₅ before they are assigned to the RGB channels of the first colour endpoint ("e0") and second colour endpoint ("e1") of the colour endpoint pair - as defined for CEMs 8 and 12 in Sections 23.14.6 and 23.14.9, respectively. Likewise, for CEM 12, a "blue contract" operation is applied to the colour values V₆ and V₇ before they are assigned to the A channels of the first and second colour endpoints - as defined in Section 23.14.9 of the ASTC Specification referred to herein. The "blue contract" operation is defined in Section 23.14.10 of the ASTC Specification referred to herein.

### CEMs 9 and 13

CEMs 9 and 13 are defined in Sections 23.14.7 and 23.14.10, respectively, of the ASTC Specification referred to herein. When the selected CEM is CEM 9 or 13, the decoder (e.g. decoder 300) can be configured to generate a plurality of input values in the manner shown in Table 4 for the multiple inputs of the logic circuit 312 shown in Figure 4. In Table 4, the least significant bit of each bit string input value is shown in the right-hand column. In Table 4, V_{X}^{Y} refers to the Y^{th} bit of the X^{th} colour value associated with the partition using CEM 9 or 13, respectively, decoded from the block of encoded texture data. Each input value is a signed input value. In Table 4, an inverted bit is indicated using the symbol "~". For example: if V_{X}^{Y} is equal to 1, ~V_{X}^{Y} will be equal to 0; and if V_{X}^{Y} is equal to 0, ~V_{X}^{Y} will be equal to 1. A "~0" bit is the same as a "1" bit. Each of the fourth, seventh and eighth input values 402-4, 402-7 and 402-8 are inverted input values as described herein. That is, each of the fourth, seventh and eighth input values 402-4, 402-7 and 402-8 are generated by bit-inverting sequences of bits from colour values encoded in the data block, without adding one to the values of said inverted input values. That is, each of these input values is associated with a deficit of "-1", as described herein. As such, the decoder is configured to generate a value of -3 as the third input value 402-3, in order to compensate for said inverted input values. That is, the decoder is configured to use the technique described herein with reference to Figure 5C. The fourth, seventh and eighth input values 402-4, 402-7 and 402-8 are also "left-shifted" by one bit, relative to the respective bit string values defined in Sections 23.14.7 and 23.14.10 of the ASTC Specification, prior to the bit-inversion described herein. This enables the logic circuit 312 to be used to determine an intermediate output value representative of the value of "(v1+ v3 + v5)" specified in Sections 23.14.7 and 23.14.10 of the ASTC Specification referred to herein - rather than a separate logic circuit being provided with different operational units to determine the actual value of "(v1+ v3 + v5)". The third input value 402-3 is a 13-bit signal. Each of the other input values are 9-bit signals.

Table 4 does not show a first, second, fifth, sixth, ninth or tenth input value 402-1, 402-2, 402-5, 402-6, 402-9 or 402-10. That is, input values need not be generated for all of the multiple inputs of the logic circuit 312. When the selected CEM is CEM 9 or 13, the first, third, fifth and sixth intermediate output values 404-1, 404-3, 404-5 and 404-6 are not used to determine the colour endpoint pair, and thus the decoder need not generate any input values for the first subtractor 406-1, the third subtractor 406-3 or the first adder 408-1. That is, no input values, or any arbitrary input values, could be generated for inputting to the first subtractor 406-1, the third subtractor 406-3 and/or the first adder 408-1 - as any intermediate value(s) they output will not be used.

**Table 4: Input values for CEMs 9 and 13**

| **Third input value 402-3** (signed bit string) | | | | | | | | | | | | |
|---|---|---|---|---|---|---|---|---|---|---|---|---|
| 1 | 1 | 1 | 1 | 1 | 1 | 1 | 1 | 1 | 1 | 1 | 0 | 1 |

| **Fourth input value 402-4** (signed bit string) | | | | | | | | | | | | |
|---|---|---|---|---|---|---|---|---|---|---|---|---|
| - | - | - | - | ~V₃⁶ | ~V₃⁶ | ~V₃⁶ | ~V₃⁵ | ~V₃⁴ | ~V₃³ | ~V₃² | ~V₃¹ | ~0 |

| **Seventh input value 402-7** (signed bit string) | | | | | | | | | | | | |
|---|---|---|---|---|---|---|---|---|---|---|---|---|
| - | - | - | - | ~V₅⁶ | ~V₅⁶ | ~V₅⁶ | ~V₅⁵ | ~V₅⁴ | ~V₅³ | ~V₅² | ~V₅¹ | ~0 |

| **Eighth input value 402-8** (signed bit string) | | | | | | | | | | | | |
|---|---|---|---|---|---|---|---|---|---|---|---|---|
| - | - | - | - | ~V₁⁶ | ~V₁⁶ | ~V₁⁶ | ~V₁⁵ | ~V₁⁴ | ~V₁³ | ~V₁² | ~V₁¹ | ~0 |

When the logic circuit 312 operates on the plurality of input values specified in Table 4, the seventh intermediate output value 404-7 of the logic circuit 312 can be used in determining a colour endpoint pair in accordance with CEMs 9 or 13. The seventh intermediate output value 404-7 is representative of the value of "(v1 + v3 + v5)" specified in for CEMs 9 and 13 in Sections 23.14.7 and 23.14.10 of the ASTC Specification referred to herein. As described herein, the fourth, seventh and eighth input values 402-4, 402-7 and 402-8 are "left-shifted" by one bit, relative to the respective bit string values defined in Sections 23.14.7 and 23.14.10 of the ASTC Specification, and so the seventh intermediate output value 404-7 is not equal to the value of "(v1 + v3 + v5)" specified in the ASTC Specification. That said, despite this left-shifting, the seventh intermediate output value 404-7 will be greater than, equal to or less than zero for the same decoded colour values as would the value of "(v1 + v3 + v5)" be greater than, equal to or less than zero - and so the seventh intermediate output value 404-7 can be used as a proxy for the value of "(v1 + v3 + v5)" for the purposes of CEMs 9 and 13.

If the seventh intermediate output value 404-7 is greater than or equal to zero, for CEM 9, the values of the RGB channels of first colour endpoint ("e0") and second colour endpoint ("e1") of the colour endpoint pair are determined in dependence on the colour values V₀ through V₅ decoded form the encoded data block - as defined for when "(v1 + v3 + v5) >= 0" in Section 23.14.7 of the ASTC Specification referred to herein.

If the seventh intermediate output value 404-7 is greater than or equal to zero, for CEM 13, the values of the RGBA channels of the first colour endpoint ("e0") and second colour endpoint ("e1") of the colour endpoint pair are determined in dependence on the colour values V₀ through V₇ decoded form the encoded data block - as defined for when "(v1 + v3 + v5) >= 0" in Section 23.14.10 of the ASTC Specification referred to herein.

If the seventh intermediate output value 404-7 is less than zero, for CEM 9, a "blue contract" operation is applied to the colour values V₀ through V₅ before the values of the RGB channels of the first colour endpoint ("e0") and second colour endpoint ("e1") of the colour endpoint pair are determined in dependence on said colour values - as defined for when "else" in Section 23.14.7 of the ASTC Specification referred to herein. The "blue contract" operation is defined in Section 23.14.10 of the ASTC Specification referred to herein.

If the seventh intermediate output value 404-7 is less than zero, for CEM 13, a "blue contract" operation is applied to the colour values V₀ through V₇ before the values of the RGBA channels of the first colour endpoint ("e0") and second colour endpoint ("e1") of the colour endpoint pair are determined in dependence on said colour values - as defined for when "else" in Section 23.14.10 of the ASTC Specification referred to herein. The "blue contract" operation is defined in Section 23.14.10 of the ASTC Specification referred to herein.

### Method

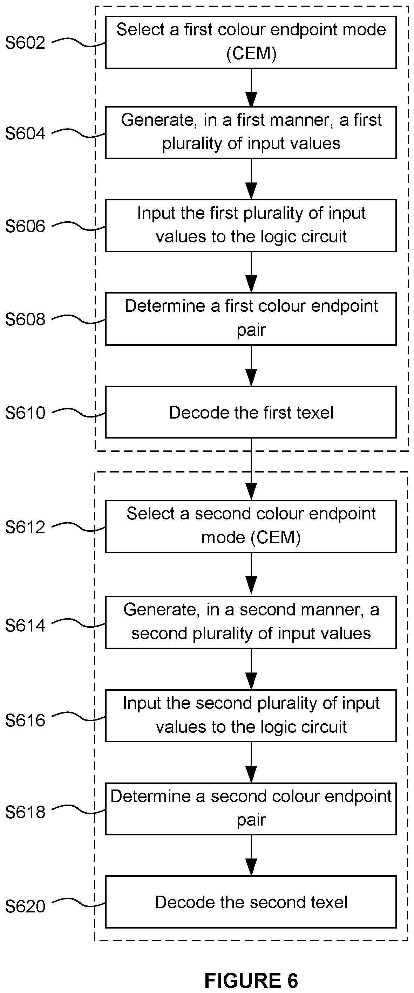

Figure 6 shows a method of decoding first and second texels from a block of texture data (e.g. block of texture data 310 described herein) encoded according to the ASTC format. The method shown in Figure 6 can be performed using a decoder (e.g. decoder 300 described herein) comprising a logic circuit (e.g. logic circuit 312 described herein) for use in calculating colour endpoints in accordance with a plurality of different colour endpoint modes (CEMs).

Steps S602 to S610 are performed so as to decode the first texel. In step S602, a first colour endpoint mode (CEM) of the plurality of different CEMs is selected. By way of example only, the first CEM may be CEM 7. Step S604 comprises generating, in a first manner, in dependence on the first CEM, a first plurality of input values for inputting to the multiple inputs of the logic circuit, the first plurality of input values being generated such that, when operated on by the logic circuit, the logic circuit will generate at least one first intermediate output value at its multiple outputs for use in calculating colour endpoints in accordance with the first CEM. By way of example only, the first plurality of input values may be generated in the manner described herein with reference to Table 1. In step S606, the first plurality of input values are input to inputs of the multiple inputs of the logic circuit, the logic circuit operating on said first plurality of input values so as to generate said at least one first intermediate output value. In step S608, a first colour endpoint pair is determined in accordance with the first CEM in dependence on said at least one first intermediate output value. By way of example only, the first colour endpoint pair may be determined as described herein in the paragraphs following Table 1. In step S610, the first texel is decoded in dependence on the first colour endpoint pair. For example, this decoding step can be performed by the interpolator unit 308 of decoder 300 - in the manner described herein.

Steps S612 to S620 are performed so as to decode the second texel. In step S612, a second colour endpoint mode (CEM) of the plurality of different CEMs is selected. By way of example only, the second CEM may be CEM 8. Step S614 comprises generating, in a second manner, in dependence on the second CEM, a second plurality of input values for inputting to the multiple inputs of the logic circuit, the second plurality of input values being generated such that, when operated on by the logic circuit, the logic circuit will generate at least one second intermediate output value at its multiple outputs for use in calculating colour endpoints in accordance with the second CEM. By way of example only, the second plurality of input values may be generated in the manner described herein with reference to Table 3. The second manner may be different to the first manner. In step S616, the second plurality of input values are input to inputs of the multiple inputs of the logic circuit, the logic circuit operating on said second plurality of input values so as to generate said at least one second intermediate output value. In step S618, a second colour endpoint pair is determined in accordance with the second CEM in dependence on said at least one second intermediate output value. By way of example only, the second colour endpoint pair may be determined as described herein in the paragraphs following Table 3. In step S620, the second texel is decoded in dependence on the second colour endpoint pair. For example, this decoding step can be performed by the interpolator unit 308 of decoder 300 - in the manner described herein.

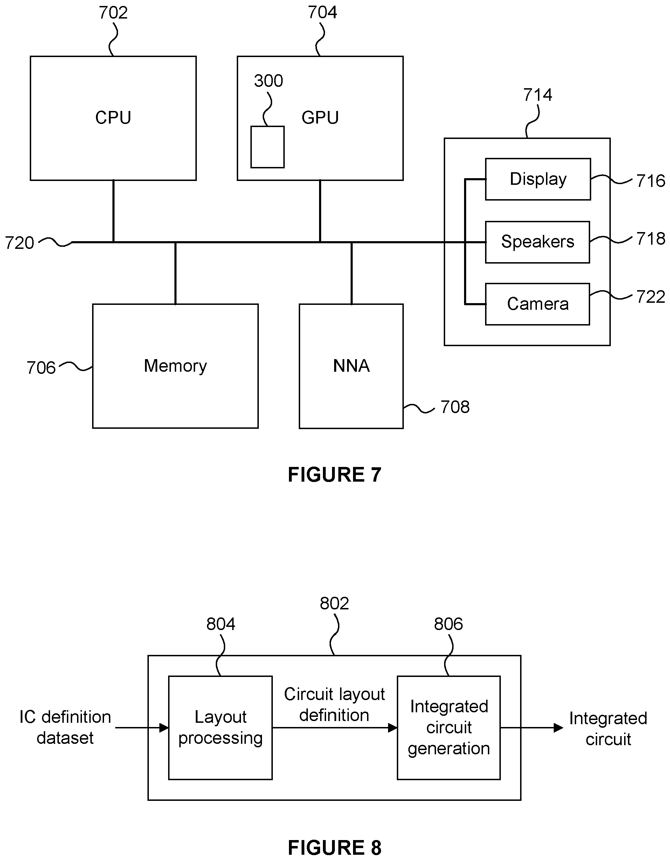

Figure 7 shows a computer system in which the decoder 300 described herein may be implemented. The computer system comprises a CPU 702, a GPU 704, a memory 706, a neural network accelerator (NNA) 708 and other devices 714, such as a display 716, speakers 718 and a camera 722. A decoder 300 according to the principles described herein can be implemented (e.g. in hardware) within the GPU 704. In other examples, one or more of the depicted components may be omitted from the system, and/or the decoder 300 may be implemented in hardware in the data path between the memory 706 (e.g. that stores the encoded texture data) and the GPU 704. The components of the computer system can communicate with each other via communications bus 720.

The decoder of Figure 3 and logic circuit of Figure 4 is shown as comprising a number of functional blocks. This is schematic only and is not intended to define a strict division between different logic elements of such entities. Each functional block may be provided in any suitable manner. It is to be understood that intermediate values described herein as being formed by a decoder and/or a logic circuit need not be physically generated by the decoder and/or logic circuit at any point and may merely represent logical values which conveniently describe the processing performed by the decoder and/or logic circuit between its input and output.

The decoder described herein may be embodied in hardware on an integrated circuit. The decoder described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a decoder configured to perform any of the methods described herein, or to manufacture a decoder comprising any apparatus described herein. An integrated circuit definition dataset may be, for example, an integrated circuit description.

Therefore, there may be provided a method of manufacturing, at an integrated circuit manufacturing system, a decoder as described herein. Furthermore, there may be provided an integrated circuit definition dataset that, when processed in an integrated circuit manufacturing system, causes the method of manufacturing a decoder to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a decoder will now be described with respect to Figure 8.

Figure 8 shows an example of an integrated circuit (IC) manufacturing system 802 which is configured to manufacture a decoder as described in any of the examples herein. In particular, the IC manufacturing system 802 comprises a layout processing system 804 and an integrated circuit generation system 806. The IC manufacturing system 802 is configured to receive an IC definition dataset (e.g. defining a decoder as described in any of the examples herein), process the IC definition dataset, and generate an IC according to the IC definition dataset (e.g. which embodies a decoder as described in any of the examples herein). The processing of the IC definition dataset configures the IC manufacturing system 802 to manufacture an integrated circuit embodying a decoder as described in any of the examples herein.

The layout processing system 804 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 804 has determined the circuit layout it may output a circuit layout definition to the IC generation system 806. A circuit layout definition may be, for example, a circuit layout description.

The IC generation system 806 generates an IC according to the circuit layout definition, as is known in the art. For example, the IC generation system 806 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 806 may be in the form of computer-readable code which the IC generation system 806 can use to form a suitable mask for use in generating an IC.

The different processes performed by the IC manufacturing system 802 may be implemented all in one location, e.g. by one party. Alternatively, the IC manufacturing system 802 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a decoder without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 8 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 8, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A decoder configured to decode a texel from a block of texture data encoded according to the Adaptive Scalable Texture Compression (ASTC) format, the decoder comprising a logic circuit for use in calculating colour endpoints in accordance with a plurality of different colour endpoint modes (CEMs), in which:
the logic circuit comprises multiple inputs and multiple outputs; and
the decoder is configured to:
select a colour endpoint mode (CEM) of the plurality of different CEMs;
generate, in dependence on the selected CEM, a plurality of input values for inputting to the multiple inputs of the logic circuit, wherein:
the plurality of input values are generated such that, when operated on by the logic circuit, the logic circuit will generate at least one intermediate output value at its multiple outputs for use in calculating colour endpoints in accordance with the selected CEM; and
for different CEMs of the plurality of CEMs, the decoder is configured to generate, in a different manner, a different plurality of input values for inputting to the same inputs of the multiple inputs of the logic circuit;
input the plurality of input values to the multiple inputs of the logic circuit, the logic circuit being configured to operate on said plurality of input values so as to generate said at least one intermediate output value;
determine a colour endpoint pair in accordance with the selected CEM in dependence on said at least one intermediate output value; and
decode the texel in dependence on the colour endpoint pair.

2. The decoder of claim 1, wherein the logic circuit comprises one or more operational units, the one or more operational units being configured to perform the same operation(s) on input values received at the multiple inputs of the logic circuit for different CEMs of the plurality of CEMs.

3. The decoder of claim 1 or 2, wherein:
the logic circuit comprises an operational unit operable to subtract an input value A from an input value B; and
for at least one CEM of the plurality of different CEMs, the decoder is configured to generate said input values A and B such that the input value B has a value double that of the input value A.

4. The decoder of any of claims 1 to 3, wherein:
the logic circuit comprises an operational unit operable to add an input value C to an input value D; and
for at least one CEM of the plurality of different CEMs, the decoder is configured to generate said input values C and D such that the input value D has a value of zero.

5. The decoder of any preceding claim, wherein, for at least one CEM of the plurality of different CEMs, the plurality of input values comprises one or more inverted input values and one or more compensatory input values, and the decoder is configured to:
generate the one or more inverted input values by, for each inverted input value:
inverting each of the bits of an intermediate input value so as to generate an inverted input value, wherein said inverting does not comprise adding one to the value of said inverted input value; and
generate the one or more compensatory input values such that, when the logic circuit operates on the one or more inverted input values and the one or more compensatory input values, the one or more compensatory input values compensate for said inverting not comprising adding one to the value of each of said one or more inverted input values.

6. The decoder of any preceding claim, wherein at least one of the plurality of input values is a bit string generated using bits selected from colour values encoded in the data block, optionally wherein, for different CEMs of the plurality of CEMs, the decoder is configured to generate, using different bits selected from the colour values encoded in the data block and/or by arranging bits of the colour values encoded in the data block in different positions, different bit strings for inputting to the same input(s) of the multiple inputs of the logic circuit.

7. The decoder of any preceding claim, wherein the logic circuit comprises a set of adders and/or subtractors, optionally wherein the same set of adders and/or subtractors are used for different CEMs of the plurality of CEMs.

8. The decoder of any preceding claim, wherein the logic circuit comprises:
a first subtractor configured to subtract a second input value from a first input value to output a first intermediate output value;
a second subtractor configured to subtract a fourth input value from a third input value to output a second intermediate output value;
a first adder configured to sum a fifth input value and a sixth input value to output a third intermediate output value;
a second adder configured to sum a seventh input value and an eight input value to output a fourth intermediate output value;
a third subtractor configured to subtract a tenth input value from a ninth input value to output a fifth intermediate output value;
a fourth subtractor configured to subtract the third intermediate output value from the first intermediate output value to output a sixth intermediate output value; and
a fifth subtractor configured to subtract the fourth intermediate output value from the second intermediate output value to output a seventh intermediate output value.

9. The decoder of claim 8, wherein:
the selected CEM is CEM 7, 11, 14 or 15, and wherein the first, second, fifth, sixth and seventh intermediate output values are used in determining the colour endpoint pair in accordance with the selected CEM; or
wherein the selected CEM is CEM 8 or 12, and wherein the sixth and seventh intermediate output values are used in determining the colour endpoint pair in accordance with the selected CEM; or
wherein the selected CEM is CEM 9 or 13, and wherein the seventh intermediate output value is used in determining the colour endpoint pair in accordance with the selected CEM.

10. The decoder of claim 8 or 9, wherein the selected CEM is CEM 7, and wherein:
the decoder is configured to generate a value of zero as the fifth input value, such that the third intermediate output value will be equal to the sixth input value; and/or
the decoder is configured to generate a value of zero as the seventh input value, such that the fourth intermediate output value will be equal to the eighth input value.

11. The decoder of claim 8 or 9, wherein the selected CEM is mode 5 of CEM 11, 14 or 15, and wherein:
the decoder is configured to generate the first and second input values such that the first input value has a value double that of the second input value in order that the first intermediate output value will be equal to the second input value; and/or
the decoder is configured to generate the third and fourth input values such that the third input value has a value double that of the fourth input value in order that the second intermediate output value will be equal to the fourth input value.

12. The decoder of claim 8 or 9, wherein the selected CEM is CEM 8 or 12, and wherein the decoder is configured to generate values of -3 as the first and third input values, in order to compensate for generating the second, fourth, fifth, sixth, seventh and eight input values by inverting each of the bits of respective intermediate input values without adding one to the values of said inverted intermediate input values.

13. The decoder of claim 8 or 9, wherein the selected CEM is CEM 9 or 13, and wherein the decoder is configured to generate a value of -3 as the third input value, in order to compensate for generating the fourth, seventh and eight input values by inverting each of the bits of respective intermediate input values without adding one to the values of said inverted intermediate input values.

14. A method of decoding, using a decoder comprising a logic circuit for use in calculating colour endpoints in accordance with a plurality of different colour endpoint modes (CEMs), first and second texels from a block of texture data encoded according to the Adaptive Scalable Texture Compression (ASTC) format, the logic circuit comprising multiple inputs and multiple outputs, the method comprising:
so as to decode the first texel:
selecting a first colour endpoint mode (CEM) of the plurality of different CEMs;
generating, in a first manner, in dependence on the first CEM, a first plurality of input values for inputting to the multiple inputs of the logic circuit, the first plurality of input values being generated such that, when operated on by the logic circuit, the logic circuit will generate at least one first intermediate output value at its multiple outputs for use in calculating colour endpoints in accordance with the first CEM; and
inputting the first plurality of input values to inputs of the multiple inputs of the logic circuit, the logic circuit operating on said first plurality of input values so as to generate said at least one first intermediate output value;
determining a first colour endpoint pair in accordance with the first CEM in dependence on said at least one first intermediate output value; and
decoding the first texel in dependence on the first colour endpoint pair; and
so as to decode the second texel:
selecting a second CEM of the plurality of different CEMs;
generating, in a second manner, in dependence on the second CEM, a second plurality of input values for inputting to the same inputs of the multiple inputs of the logic circuit, the second plurality of input values being generated such that, when operated on by the logic circuit, the logic circuit will generate at least one second intermediate output value at its multiple outputs for use in calculating colour endpoints in accordance with the second CEM; and
inputting the second plurality of input values to the multiple inputs of the logic circuit, the logic circuit operating on said second plurality of input values so as to generate said at least one second intermediate output value;
determining a second colour endpoint pair in accordance with the second CEM in dependence on said at least one second intermediate output value; and
decoding the second texel in dependence on the second colour endpoint pair.

15. An integrated circuit definition dataset that, when processed in an integrated circuit manufacturing system, configures the integrated circuit manufacturing system to manufacture the decoder as claimed in any of claims 1 to 13.
